# EUROPÄISCHE PATENTANMELDUNG

(11) **EP 1 717 268 A1**
(43) Veröffentlichungstag der Anmeldung: **02.11.2006**
(21) Anmeldenummer: 06006037.3
(22) Anmeldetag: 23.03.2006
(51) Int. Cl.: C08K 9/06, C08K 3/36, C08K 5/00

(54) **Verfahren zur Herstellung von verstärkenden Füllstoff enthaltenden,fließfähigen, vernetzbaren Polyorganosiloxanmassen**

(30) Priorität: 28.04.2005 DE 102005019872
(71) Anmelder: Wacker Chemie AG, 81737 München (DE)
(72) Erfinder: Kollmann, Georg, Dr., 84489 Burghausen (DE); Sieglhuber, Friedrich,, 5282 Ranshofen (AT)
(74) Vertreter: Fritz, Helmut

(57) **Zusammenfassung**

Gegenstand der Erfindung ist ein Verfahren zur Herstellung von fließfähigen, verstärkenden Füllstoff enthaltenden Polyorganosiloxanmassen, die bei Raumtemperatur oder erhöhter Temperatur zu Elastomeren vulkanisieren und bei Zusatz polarer Additive ihre Fließfähigkeit beibehalten.

## Beschreibung

Gegenstand der Erfindung ist ein Verfahren zur Herstellung von fließfähigen, verstärkenden Füllstoff enthaltenden Polyorganosiloxanmassen, die bei Raumtemperatur oder erhöhter Temperatur zu Elastomeren vulkanisieren und bei Zusatz polarer Additive ihre Fließfähigkeit beibehalten.

Fließfähige Siliconkautschukmassen werden in vielen Anwendungsbereichen eingesetzt, so u.a. als Gießmassen zur Herstellung von elastischen Negativformen sowie von Formteilen wie Drucktampons, Kabelgarnituren etc. Wegen der relativ hohen mechanischen Anforderungen an derartige Formen und Formteile werden meist verstärkende Füllstoffe enthaltende Zusammensetzungen verwendet, wobei es sich bei diesen verstärkenden Füllstoffen überwiegend um gefällte oder pyrogene Kieselsäuren mit einer spezifischen Oberfläche (BET) von > 40 m²/g handelt.

Wird hydrophile, d.h. unbehandelte Kieselsäure mit längerkettigen (n > 50) Siloxanpolymeren vermischt, kommt es zu ausgeprägten Füllstoff-/Polymer- Wechselwirkungen, die im Wesentlichen auf Wasserstoffbrückenbindungen zwischen den SiOH-Gruppen auf der Kieselsäureoberfläche und den Sauerstoffatomen der Polysiloxanketten beruhen. Da eine längere Polymerkette mit mehreren Füllstoffpartikeln wechselwirken kann, kommt es nicht nur zu der gewünschten Verstärkungswirkung durch Fixierung von Polymerketten auf der Oberfläche der einzelnen Füllstoffteilchen, sondern auch zu einer Pseudovernetzung ("Strukturbildung") und in der Folge zu nicht ausreichend fließfähigen und lagerstabilen Polymer-/Füllstoff-Dispersionen. Daher muss die Oberfläche der Kieselsäure in geeigneter Weise modifiziert werden. Von den zahlreichen, in der Literatur als grundsätzlich geeignet beschriebenen und dem Fachmann bekannten Behandlungsmitteln sind Siliciumverbindungen mit Si-Cl-, Si-N-, Si-H-, SiOH- und Si-OR - Funktionen, teilweise in Verbindung mit zusätzlichen Katalysatoren, am gebräuchlichsten, wobei die Kieselsäure entweder in einem gesonderten Prozess behandelt und nachträglich mit dem Siliconpolymer vermischt, oder aber in Gegenwart des Siliconpolymers "in situ" hydrophobiert wird. Dem Fachmann ist ebenfalls bekannt, dass der Einsatz vorbehandelter Kieselsäure ohne zusätzliche In-situ-Behandlung im Vergleich zum reinen In-situ-Prozess in der Regel bei gleichem Füllstoffanteil zu weniger gut fließfähigen Massen führt. Aber auch beim In-situ-Prozess muss die Vielzahl von möglichen Einflussgrößen wie Art und Menge des Behandlungsmittels, Temperaturführung, Art der Einbringung der Kieselsäure, Scherung, Entfernung Flüchtiger etc. je nach gewünschtem Ergebnis optimiert werden, was sich oft als schwierig erweist.

Für die Behandlung hydrophiler Kieselsäuren gibt es zwei prinzipielle Möglichkeiten:
A) Umsetzung der SiOH-Gruppen auf der Kieselsäure mit einer im Grundsatz stöchiometrischen Menge eines monomeren oder oligomeren Behandlungsmittels, mit dem Ziel ihrer überwiegenden Umwandlung in sterisch relativ kleine, unpolare und somit nicht mehr wechselwirkungsfähige Gruppen.
B) Abschirmung der SiOH-Gruppen durch Belegung der Kieselsäureoberfläche mit relativ kurzkettigen (um Überbrückungstendenzen zwischen den Füllstoffpartikeln gering zu halten) Oligo- oder Polyorganosiloxanen, die reaktiv oder/und über Wasserstoffbrückenbindungen auf der Füllstoffoberfläche verankert und fixiert sind.

Einige den Stand der Technik bildende Verfahrensvarianten nach A) oder B) bzw. einer Kombination von A) und B) ergeben Siliconkautschukmassen sowohl mit ausreichender Fließfähigkeit und Lagerbeständigkeit als auch Vulkanisatmechanik, speziell Reiß- und Weiterreißfestigkeit. Dies gilt in der Regel aber nur, falls keine polaren Zusatzstoffe benötigt werden. Ist jedoch der Einsatz solcher Additive erforderlich, um dem Kautschuk bestimmte Eigenschaften zu verleihen, wie beispielsweise durch oberflächenaktive Substanzen (als Antistatika bzw. Hydrophilmodifier), funktionelle Silane (als Haftvermittler) oder Phenylsiliconöle (als selbstausschwitzende Medien beispielsweise für Trenn-, Gleit- oder Hydrophobiereffekte), dann können diese sowohl mit noch vorhandenen und sterisch zugänglichen SiOH-Gruppen auf der Kieselsäureoberfläche als auch verfahrensbedingt noch im System vorhandenen Resten polarer Behandlungsmittel bzw. deren Reaktionsprodukten in Wechselwirkung treten, wodurch es zu einem Verdickungs- bzw. Thixotropieeffekt kommt, der bis zur standfesten Konsistenz der ursprünglich fließfähigen Kautschukmasse führen kann.

Es hat nicht an Versuchen gefehlt, durch die Wahl geeigneter Behandlungsmittel bzw. Verfahrensparameter den Anforderungen entsprechende Kompromisse zwischen Fließfähigkeit, Lagerstabilität, Vulkanisatmechanik und Toleranz gegen strukturbildende Additive zu erzielen.

Es ist bekannt, dass mit den am häufigsten zur Kieselsäurebehandlung zum Einsatz kommenden Silazanen, in der Regel Hexamethyldisilazan, nach gängigen Verfahren, wie beispielsweise in dem Patent US 3,243,404 beschrieben, hergestellte Polyorganosiloxan-/Kieselsäure-Zubereitungen bei Zusatz polarer Additive ihre Fließfähigkeit verlieren, was zum einen der mangelnden Abdeckwirkung der relativ kleinen Trimethylsiloxy-Gruppen für die stark zerklüftete KieselsäureOberfläche, zum anderen der Bildung von polaren Reaktionsprodukten wie Trimethylsilanol und Aminen zugeschrieben wird.

Die europäische Patentanmeldung EP 1 171 079 A1 beansprucht ein Siliconmaterial, das Verfahren zu dessen Herstellung sowie dessen Verwendung, gekennzeichnet durch eine additionsvernetzende Polyorganosiloxanzusammensetzung, die neben pyrogener Kieselsäure als verstärkendem Füllstoff ein Netzmittel enthält, das aus einem oder mehreren oberflächenaktiven Agentien, die der Siliconoberfläche einen hydrophilen Charakter verleihen, besteht. Das Siliconmaterial soll sich speziell als Dentalabformmasse eignen und einen Kompromiss zwischen Fließfähigkeit im unvernetzten Zustand, Hydrophilie im unvernetzten und vernetzten Zustand, und hoher mechanischer Festigkeit im vernetzten Zustand bieten. Das in dieser Anmeldung beschriebene Behandlungsverfahren für die Kieselsäure ist mit dem in der europäischen Patentanmeldung EP 0 991 712 A1 beanspruchten Verfahren identisch.

Die internationale Patentanmeldung WO2002/102326 A1 beansprucht ein Siliconmaterial, das Verfahren zu dessen Herstellung sowie dessen Verwendung, bestehend aus einer additionsvernetzenden Polyorganosiloxan-Zusammensetzung, die neben pyrogener Kieselsäure als verstärkendem Füllstoff nichtionische Tenside enthält, die der Siliconkautschukoberfläche hydrophile und/oder antistatische Eigenschaften verleihen. Das Siliconmaterial eignet sich speziell als Dentalabformmasse, als Formenmasse zur Reproduktion von Dentalabgüssen sowie zur Herstellung von Drucktampons und Kopierwalzen. Zwar wird in den Beispielen eine mit Octamethylcyclotetrasiloxan vorbehandelte Kieselsäure verwendet; die Beschreibung verweist jedoch darauf, dass, falls eine gute Fließfähigkeit benötigt wird, es vorteilhaft ist, die Kieselsäure nach dem Verfahren entsprechend der europäischen Patentanmeldung EP 0 991 712 A1 zu behandeln.

Die Siliconmaterialien aus beiden zuvor genannten Patentschriften EP 1 171 079 A1 und WO2002/102326 A1 weisen trotz Zusatz polarer Additive in der erforderlichen Wirkkonzentration eine ausreichende Fließfähigkeit auf, was durch ein spezielles In-situ-Behandlungsverfahren für die pyrogene Kieselsäure erreicht wird, die dann in Form einer Polymer-/Füllstoff-Suspension in diese Fertigmassen eingebracht wird. Dieses Verfahren wird in der europäischen Patentanmeldung EP 0 991 712 A1 beansprucht, wobei sich die betreffende Suspension zur Herstellung von additionsvernetzenden SiliconZusammensetzungen eignet, dadurch gekennzeichnet, dass die Behandlung in mindestens zwei Schritten erfolgt, wobei das Siliconmaterial oder eine Teilmenge desselben, Wasser und der gesamte Füllstoff oder eine Teilmenge desselben mit einer ersten Teilmenge des gesamten Behandlungsmittels im Ausmaß von weniger als 8%, bevorzugt weniger als 5%, und besonders bevorzugt weniger als 3% , bezogen auf das Trockengewicht des Füllstoffs, vermischt werden, und danach eine zweite Teilmenge des gesamten Behandlungsmittels im Ausmaß von 5 - 25, bevorzugt 10 - 20 Gew.-%, bezogen auf das Trockengewicht des Füllstoffs, eingemischt wird. Aus den Beispielen geht hervor, dass das Behandlungsmittel bevorzugt ein Silazan, besonders bevorzugt Hexamethyldisilazan (HMDS), ist, wobei jedoch im ersten Behandlungsschritt neben HMDS als alternative Behandlungsmittel auch difunktionelle, bevorzugt jedoch monofunktionelle Siloxane mit Hydroxylgruppen, Amine, bevorzugt Ammoniak, und/oder Alkylamine, besonders bevorzugt Diethylamin, oder organische Säuren, bevorzugt Ameisen- oder Essigsäure, allein oder im Gemisch, eingesetzt werden können.

Das europäische Patent EP 1 141 108 B1 beansprucht ein gleichartiges Verfahren für die Herstellung von durch Polykondensation vernetzbaren Siliconzusammensetzungen, dadurch gekennzeichnet, dass der teilchenförmige, verstärkende Füllstoff mit Hilfe eines Kompatibilisierungsmittels derart behandelt wird, dass eine Teilmenge des Behandlungsmittels, die 8 - 30 Gew.-% des Trockengewichts des Füllstoffes entspricht, vor und/oder etwa gleichzeitig mit dem Einbringen mindestens einer Teilmenge der eingesetzten Siliconmatrix sowie des verwendeten teilchenförmigen, verstärkenden Füllstoffes, der 10 - 50 Gew.-% des Polyorganosiloxans umfasst, zugesetzt wird, und die zweite Teilmenge, die zwischen 2 und 25 Gew.-% des Trockengewichts des Füllstoffes entspricht, nach dem Eintragen des Füllstoffes in zumindest eine Teilmenge der Siliconmatrix. Als Kompatibilisierungsmittel werden ausschließlich Organo- oder Cycloorganosilazane beansprucht, die unter Normalbedingungen flüssig sind, bevorzugt jedoch Hexamethyldisilazan.

Beide beanspruchten Verfahrensvarianten benötigen mindestens ein gesondert herzustellendes und einzusetzendes Behandlungsmittel, bevorzugt Hexamethyldisilazan, gegebenenfalls in Verbindung mit Divinyltetramethyldisilazan, in einer Gesamtmenge von mindestens 5 Gew.-%, bevorzugt jedoch über 10 Gew.-%, bezogen auf das Trockengewicht der Kieselsäure, wobei die Zugabe in zumindest zwei Schritten erfolgen muss. Auch wenn, wie in den Patentschriften EP 1 171 079 A1 und EP 0 991 712 A1 beansprucht, im ersten Behandlungsschritt eines der genannten alternativen Behandlungsmittel zum Einsatz kommt, wird im zweiten Behandlungsschritt, und somit als überwiegender Teil der Gesamtmenge an Behandlungsmittel, stets Hexamethyldisilazan verwendet. Die Reaktionsprodukte Trimethylsilanol, Ammoniak und gegebenenfalls Amine müssen absolut vollständig entfernt werden, falls polare Additive zugesetzt und dennoch fließfähige Massen erhalten werden sollen, was besonders zeit- und kostenaufwändige Ausheizschritte erfordert. Im Falle eines Einsatzes von Diethylamin kommt noch die Tendenz zur Gelbfärbung sowie die Gefahr der Bildung von kanzerogenen Nitrosaminen mit heute ubiquitär vorhandenen Stickoxiden dazu.

Von den unter B) genannten In-situ-Behandlungsmitteln kommen zum weitaus überwiegenden Teil difunktionelle, manchmal auch monofunktionelle Siloxane mit Hydroxylgruppen zum Einsatz:

Die Verwendung SiOH-haltiger Silane bzw. Siloxane als Behandlungsmittel für pyrogene Kieselsäure beschreibt beispielsweise Patent US 2,890,188**,** das 100 Gew.-Teile eines benzollöslichen Polymers mit einer Viskosität ≥ 10.000 mPa·s, 1 - 100 Gew.-Teile eines Organosil(ox)ans mit einem SiOH-Gehalt von 3300 - 370.000 ppm, 10 - 90 Gew.-Teile HDK und 1 - 10 Gew.-Teile eines Vulkanisationsmittels, bevorzugt ein Organoperoxid, beansprucht. Ziel ist die Herstellung lagerstabiler Massen, die zu Vulkanisaten mit erhöhter mechanischer Festigkeit führen.

Das Patent US 5,118,754 beansprucht additionsvernetzende, pyrogene Kieselsäure enthaltende Siliconkautschuk-Zusammensetzungen, wobei als Behandlungsmittel ein cylisches Polyorganosiloxan mit vier R₂SiO-Einheiten und mindestens einer Vinyl- und einer Hydroxyl-Gruppe pro Molekül, oder ein lineares Polyorganosiloxan mit mindestens einer Hydroxylgruppe und, im Durchschnitt, einer Vinylgruppe pro Molekül und einer mittleren Kettenlänge von n = 4 - 50 in einem Anteil von 1 - 20 Gew.-Teilen auf 100 Gew.-Teile dient, wobei die Kieselsäure entweder zusätzlich in situ mit Hexamethyldisilazan hydrophobiert wird, oder aber mit Hexamethyldisilazan vorhydrophobierte Kieselsäure zum Einsatz kommt. Ziel ist die Herstellung für den Spritzguss geeigneter, lagerstabiler Massen, deren Vulkanisate eine verbesserte Ermüdungsbeständigkeit aufweisen.

Das europäische Patent EP 491 598 B1 beansprucht eine additionsvernetzende, pyrogene Kieselsäure enthaltende Siliconkautschuk-Zusammensetzung und das Verfahren zu deren Herstellung, wobei zusätzlich zu einem speziellen niedermolekularen, OH-funktionellen Behandlungsmittel der Formel (CH₃)₃SiO(HO)(R¹)SiOSi(R¹)(OH)OSi(CH₃)₃ oder (CH₃)₃SiO(HO)(R¹)SiOSi(CH₃)₃ (R1 = Methyl, Trimethylsiloxy, Vinyl oder Trifluoropropyl), allein oder in Kombination eingesetzt, ein Kondensationskatalysator verwendet wird, wahlweise NH₃, NH₄OH, ein Ammoniumsalz, ein Phosphorsiliconat, ein Kaliumsiliconat oder eine Zinn-, Titan- oder Zinkverbindung. Ziel ist die Herstellung fließfähiger Kautschukmassen zur Herstellung von Formen mit erhöhter Trennfähigkeit gegenüber Gießharzen.

Das Patent US 5,674,935 beansprucht ein Verfahren zur In-situ-Behandlung von verstärkendem Füllstoff, dadurch gekennzeichnet, dass eine Zusammensetzung, bestehend aus einem vulkanisierbaren Silicon- oder Fluorsilicon-Polymer, pyrogener Kieselsäure und ca. 1 - 10 Gew.-Teilen eines Behandlungsmittels der Formel HO[(CH₂=CH)(R)SiO]ₐ[(R)(R¹)SiO]_{b}[(R) (R²)SiO]_{c}H mit einer Viskosität von ca. 80 - 1000 mPa•s, bis zur vollständigen Reaktion zwischen Füllstoff und Behandlungsmittel bei einer Temperatur von ca. 60 - 100°C unter Scherung gemischt und anschließend bei ca. 200°C ausgeheizt wird. Die Vulkanisation in den Beispielen erfolgte durchwegs mittels Organoperoxiden. Das Behandlungsmittel dient zusätzlich als Vernetzer. Ziel ist die Herstellung heißvulkanisierender Kautschukmassen, die bei vermindertem Anteil an verstärkendem Füllstoff dennoch gute mechanische Eigenschaften bieten.

Die vorgenannten Verfahren dienen entweder zur Herstellung a priori nicht fließfähiger, sehr hochviskoser und nur über Press- oder Extrusionsverfahren verarbeitbarer Kautschukmassen bzw. erfordern gesonderte, nur aufwendig herzustellende Behandlungsmittel. Bei den fließfähigen Massen ist ein Zusatz polarer Additive durchwegs nicht beschrieben.

Eine weitere Füllstoff-Behandlungsmethode ist die Polymerisation/Äquilibrierung relativ niedermolekularer Polyorganosiloxandiole, gegebenenfalls in Kombination mit Organocyclosiloxanen, zu höhermolekularen Polyorganosiloxanen in Gegenwart von verstärkendem Füllstoff:

Das Patent US 3,477,988 beansprucht ein Verfahren zur alkalischen Polymerisation/Äqulibrierung von Polyorganosiloxanen, ausgehend entweder von niedermolekularen Organocyclosiloxanen zur Erzielung hochmolekularer Polyorganosiloxane, oder von relativ hochmolekularen Polyorganosiloxanen zur Erzielung relativ niedermolekularer Polyorganosiloxane, wahlweise auch in Gegenwart von pyrogener Kieselsäure, Wasser und optional Kettenstoppern, dadurch gekennzeichnet, dass zusätzlich zu bereits bekannten alkalischen Polymerisations- und Äqulibrierungskatalysatoren als ein Promotor (Aktivator, Kokatalysator) eine Organophosporverbindung, bevorzugt u.a. Triethylphosphat, Hexamethylphosphoramid, Tributylphosphinoxid oder Trioctylphosphinoxid zum Einsatz kommt. Als besondere Vorzüge des Einsatzes der beanspruchten Promotoren werden genannt, dass diese die Silanolkondensation selbst in Gegenwart aktiver basischer Kondensationskatalysatoren hemmen, und dass Füllstoffe wie beispielsweise Kieselsäure anwesend sein können, ohne die Polymerisation/Äquilibrierung zu verhindern. Explizite Ziele sind nicht die In-situ-Behandlung der Kieselsäure, sondern die Bereitstellung von Katalysator-/Promoter-Systemen mit erhöhter Aktivität für die Polymerisation niedermolekularer Organosiloxane bzw. den Abbau hochmolekularer vernetzter, füllstoffhaltiger oder nicht vernetzter Polyorganosiloxane.

Das britische Patent GB 1,325,657 beansprucht ein Verfahren zur Polymerisation niedrigmolekularer Organocyclosiloxane mit n ≥ 2, gegebenenfalls in Abmischung mit linearen Organosiloxanen mit n = 1 - 20, in Gegenwart von saurer oder neutraler pyrogener Kieselsäure, wobei als Polymerisationskatalysator mindestens 0,05% einer wasserfreien Perfluoralkansulfonsäure, bezogen auf das gesamte Organosiloxan, verwendet werden. Die Neutralisation erfolgt bevorzugt mit Hexamethyldisilazan oder Zinkkarbonat. Ziel ist die Bereitstellung eines auch in Gegenwart saurer Füllstoffe aktiven Polymerisationskatalysators sowie die Herstellung verstärkenden Füllstoff enthaltender hochmolekularer Polyorganosiloxane.

Das europäische Patent EP 0 119 093 B1 beansprucht ein Verfahren zur Polymerisation eines α,ω-Hydroxypolydiorganosiloxans in Gegenwart von inaktivem oder aktivem Füllstoff, wobei ein Organosiloxan der Formel HO(R₂SiO)ₓH (x = 3 - 200) mit dem Füllstoff vermischt wird, unter zusätzlicher Verwendung eines Kondensationskatalysators der Formel MO(R₂SiO)_{z}Q, worin M ein Alkalimetall oder ein Tetraalkyammonium- oder -phosphoniumrest, Q ein Alkalimetall, ein Tetraalkylammonium- oder -phosphoniumrest oder Wasserstoff, und z ≥ 1 ist, die Mischung anschließend durch Erhitzen bei einer Temperatur unter dem Zersetzungspunkt des Katalysators entwässert, und abschließend der Katalysator desaktiviert wird, dadurch gekennzeichnet, dass das gebildete Siliconpolymer ein höheres Molekulargewicht besitzt als das Ausgangsorganosiloxan. Bevorzugter Katalysator, neben Tetra-n-butylphosphoniumdimethylsilanolat (Deaktivierung durch Erhitzen über Zersetzungstemperatur), ist Kaliumdiorganosilanolat; die Deaktivierung erfolgt mit einer schwachen Säure, bevorzugt CO₂. Die Polymer-/Füllstoff-Mischungen können als Basis für peroxidisch, kondensations- und additionsvernetzende Zubereitungen dienen.

Das europäische Patent EP 0 120 645 B1 beansprucht ein Verfahren zur Polymerisation von Organosiloxanen der Formel HO(R₂SiO)ₓH (x = 3 - 50) und/oder (R₂SiO)_{y} (y = 3 - 10), optional auch in Gegenwart von Organosiloxanen der Formeln R₃SiO(R₂SiO)₂SiR₃ und/oder R₃SiO(R₂SiO)₂H (z = 0 - 50) als Kettenstopper, in Gegenwart von saurem oder neutralem verstärkendem Füllstoff, wobei als Polymerisationskatalysator Trifluormethansulfonsäure zum Einsatz kommt. Die Neutralisation erfolgt abschließend mit einer Lewis-Base, bevorzugt kalziniertes Magnesiumoxid. Die Polymer-/Füllstoff-Mischungen können als Basis für peroxidisch, kondensations- und additionsvernetzende Zubereitungen dienen.

Das Patent US 4,482,670 beansprucht ein Verfahren zur Polymerisation von Organosiloxanen der Formel HO(R₂SiO)ₓH (x = 3 - 100), optional auch in Gegenwart von Organosiloxanen der Formeln R₃SiO(R₂SiO)_{z}SiR₃ und/oder R₃SiO(R₂SiO)_{z}H (z = 0 - 50) als Kettenstopper, in Gegenwart von saurem oder neutralem verstärkendem Füllstoff, dadurch gekennzeichnet, dass das gebildete Siliconpolymer ein höheres Molekulargewicht besitzt als das Ausgangsorganosiloxan, wobei als Polymerisationskatalysator Schwefelsäure oder eine Sulfonsäure der Formel XSO₃H (X = Halogen, Alkyl, Aryl, Alkoxy oder Aralkyl) zum Einsatz kommt. Die Neutralisation erfolgt abschließend mit einer Lewis-Base, bevorzugt kalziniertes Magnesiumoxid oder Diethylamin. Die Polymer-/Füllstoff-Mischungen können als Basis für peroxidisch, kondensations- und additionsvernetzende Zubereitungen dienen.

Das Patent US 4,486,567 beansprucht ein Verfahren zur Polymerisation von Organosiloxanen der Formel HO(R₂SiO)ₓH (x = 3 - 50), optional auch in Gegenwart von Organosiloxanen der Formel R₃SiO(R₂SiO)_{z}H (z = 0 - 50) als Kettenstopper, in Gegenwart von saurem oder neutralem verstärkendem Füllstoff unter Entfernung des bei der Reaktion gebildeten Wassers, dadurch gekennzeichnet, dass das gebildete Siliconpolymer ein höheres Molekulargewicht besitzt als das Ausgangsorganosiloxan, wobei als Polymerisationskatalysator ein quaternäres Ammoniumcarboxylat der Formel R₄¹NOC(O)R², bevorzugt Lauryltrimethylammoniumacetat, in Kombination mit einer Carbonsäure der Formel R²COOH, bevorzugt Eisessig, verwendet wird. Die Katalysatordeaktivierung erfolgt durch Erhitzen auf 150 - 200°C. Die Polymer-/Füllstoff-Mischungen können als Basis für peroxidisch, kondensations- und additionsvernetzende Zubereitungen dienen.

Das europäische Patent EP 0 205 964 B1 beansprucht ein kontinuierliches Kneterverfahren zur Herstellung von Siliconpolymer-Füllstoff-Mischungen durch Polymerisation von Organosiloxanen der allgemeinen Formel HO(R₂SiO)ₓH (x = 3 - 100) bzw. (R₂SiO)_{y} (y = 3 - 10) oder Mischungen derselben, gegebenenfalls einschließlich Organosiloxanen der Formeln R₃SiO(R₂SiO)_{z} SiR₃ bzw. R₃SiO(R₂SiO)_{z} H (z = 0 - 50) als Kettenstopper aufweisen kann, in Gegenwart von 1 - 150 Gew.-Teilen Füllstoff sowie 0,02 - 10 Gew.-Teilen eines in Gegenwart des Füllstoffs wirksamen Polymerisationskatalysators, ausgewählt aus Schwefelsäure, Sulfonsäuren der Formel XSO₃H (worin X Halogen, Alkyl, Aryl, Alkoxy oder Aralkyl bedeutet), perfluorierten Alkansulfonsäuren, Phosphorsäure, aktiviertem Ton und Kombinationen von Carbonsäuren und quaternärem Ammoniumcarboxylat bei sauren oder neutralen Füllstoffen, und Natriumhydroxid, Kaliumhydroxid, Kaliumdimethylsilanolat und Tetrabutylsulfoniumdimethylsilanolat bei basischen Füllstoffen. Die Katalysator-Deaktivierung erfolgt durch Neutralisation. Die Polymer-/Füllstoff-Mischungen können als Basis für peroxidisch, kondensations- und additionsvernetzende Zubereitungen dienen.

Alle vorgenannten Verfahren gehen prinzipiell von niedermolekularen bzw. sehr hochmolekularen bis vernetzten Polyorganosiloxanen aus, die ohne oder mit Kettenstopper durch Zusatz von Polymerisations-/Äquilibrierungskatalysatoren erst in situ in Gegenwart des verstärkenden Füllstoffes zu den letztendlich für die angestrebten Vulkanisateigenschaften erforderlichen Polymeren mit den dafür notwendigen Kettenlängen bzw. Molekulargewichten transformiert werden. Es ist den Experten bekannt, dass derartige Polymerisations-/Äquilibrierungsprozesse zur Herstellung von Organosiloxanpolymeren mit bestimmten Molekulargewichts-, d.h. Kettenlängenverteilungen bereits in Abwesenheit aktiver Füllstoffe hinsichtlich Katalysatorwahl und -deaktivierung verfahrenstechnisch aufwändig und schwierig zu steuern sind. Umso kritischer ist die Erzielung reproduzierbarer Polymerqualitäten unter den Bedingungen einer gleichzeitigen Füllstoffeinarbeitung und Behandlung einzuschätzen.

Es besteht somit der Bedarf für ein Verfahren zur Behandlung verstärkender Füllstoffe in Gegenwart von Organosiloxanpolymeren, das die vorgenannten Nachteile vermeidet.

Der vorliegenden Erfindung liegt die Aufgabe zugrunde, ein neues Verfahren zur Herstellung homogener Mischungen aus Polyorganosiloxanen und verstärkenden Füllstoffen mittels In-situ-Hydrophobierung des Füllstoffs bereitzustellen, wobei die dabei erhaltenen Polymer-/Füllstoff-Mischungen als Basis für die Herstellung von Polyorganosiloxanzubereitungen dienen können. Ein Ziel der vorliegenden Erfindung ist ein einfaches, kostengünstiges und reproduzierbares Verfahren zur Herstellung solcher Polymer-/Füllstoff- Mischungen. Ein bevorzugtes Ziel der vorliegenden Erfindung ist ein Verfahren zur Herstellung von Polymer-/Füllstoffmischungen, die sich als Basis für die Formulierung fließfähiger, vernetzbarer Polyorganosiloxanzubereitungen mit ausreichender Lagerstabilität eignen, wobei die daraus hergestellten Vulkanisate eine erhöhte mechanische Festigkeit aufweisen.

Ein besonders bevorzugtes Ziel der vorliegenden Erfindung ist ein Verfahren zur Herstellung von Polymer-/Füllstoffmischungen, die sich als Basis für die Formulierung fließfähiger, bei Raumtemperatur vernetzbarer, kondensations- oder additionsvernetzender Siliconkautschukzubereitungen mit ausreichender Lagerstabilität eignen, bei denen ein Zusatz polarer Additive in wirksamer Menge nicht zum Verlust der Fließfähigkeit durch Viskositätserhöhung oder Thixotropie führt.

Gegenstand der vorliegenden Erfindung ist daher eine fließfähige, vernetzbare Polyorganosiloxanmasse, enthaltend
(A) zumindest eine Suspension von verstärkenden Füllstoffen in Polyorganosiloxanen,
(B) zumindest ein Vernetzungssystem, ausgewählt aus der Gruppe der Kondensations- und Additionsvernetzungssysteme
(C) zumindest einen entsprechenden Vernetzungskatalysator,
(D) **gegebenenfalls** ein oder mehrere polare Additive, und
(E) **gegebenenfalls** weitere Zusatzstoffe
dadurch gekennzeichnet, dass die Suspension (A) erhalten wird durch
(1) Vermischen eines
   (X) Polyorganosiloxans mit einer Viskosität bei 23°C von 100 bis 500.000 mPa•s oder einer Mischung solcher Polyorganosiloxane mit
   (Y) Wasser, unter der Maßgabe, dass die gesamte Zusatzmenge entweder gesondert, oder aber, als Teil- oder Gesamtmenge des zugesetzten Wassers, auch als Bestandteil des Kondensations-/Äquilibrierungskatalysators (Z) oder, in adsorbiertem Zustand, über den verstärkenden Füllstoff (F) in die Mischung eingebracht werden kann, und
   (Z) einer als Kondensations-/Äquilibrierungskatalysator wirksamen Substanz oder einer Mischung solcher Substanzen,
(2) **gegebenenfalls** Äquilibrieren der Mischung bei erhöhter Temperatur, bevorzugt zwischen 50°C und 180°C über einen Zeitraum von 15 bis 120 Minuten,
(3) Zugabe eines verstärkenden Füllstoffes (F) mit einer spezifischen Oberfläche (BET) von mindestens 40 m²/g,
(4) Umsetzung bei erhöhter Temperatur, bevorzugt zwischen 50°C und 180°C,
(5) Deaktivierung des Katalysators (Z) durch Zugabe eines oder mehrerer Deaktivierungsmittel (DA),
(6) Entfernung flüchtiger Bestandteile durch Ausheizen im Inertgasstrom und/oder unter reduziertem Druck im Temperaturbereich zwischen 80°C und 180°C, und
(7) **gegebenenfalls** Zugabe eines weiteren Polysiloxans (XX) oder einer Mischung von Polysiloxanen.

Ein weiterer Gegenstand der vorliegenden Erfindung ist ein Verfahren zur Herstellung fließfähiger, vernetzbarer Polyorganosiloxanmassen, enthaltend
(A) zumindest eine Suspension von verstärkenden Füllstoffen in Polyorganosiloxanen,
(B) zumindest ein Vernetzungssystem, ausgewählt aus der Gruppe der Kondensations- und Additionsvernetzungssysteme
(C) zumindest einen entsprechenden Vernetzungskatalysator,
(D) **gegebenenfalls** ein oder mehrere polare Additive, und
(E) **gegebenenfalls** weitere Zusatzstoffe
dadurch gekennzeichnet, dass die Suspension (A) erhalten wird durch
(1) Vermischen eines
   (X) Polyorganosiloxans mit einer Viskosität bei 23°C von 100 bis 500.000 mPa•s oder einer Mischung solcher Polyorganosiloxane mit
   (Y) Wasser, unter der Maßgabe, dass die gesamte Zusatzmenge entweder gesondert, oder aber, als Teil- oder Gesamtmenge des zugesetzten Wassers, auch als Bestandteil des Kondensations-/Äquilibrierungskatalysators (Z) oder, in adsorbiertem Zustand, über den verstärkenden Füllstoff (F) in die Mischung eingebracht werden kann, und
   (Z) einer als Kondensations-/Äquilibrierungskatalysator wirksamen Substanz oder einer Mischung solcher Substanzen,
(2) **gegebenenfalls** Äquilibrieren der Mischung bei erhöhter Temperatur, bevorzugt zwischen 50°C und 180°C über einen Zeitraum von 15 bis 120 Minuten,
(3) Zugabe eines verstärkenden Füllstoffes (F) mit einer spezifischen Oberfläche (BET) von mindestens 40 m²/g,
(4) Umsetzung bei erhöhter Temperatur, bevorzugt zwischen 50°C und 180°C,
(5) Deaktivierung des Katalysators (Z) durch Zugabe eines oder mehrerer Deaktivierungsmittel (DA),
(6) Entfernung flüchtiger Bestandteile durch Ausheizen im Inertgasstrom und/oder unter reduziertem Druck im Temperaturbereich zwischen 80°C und 180°C, und
(7) **gegebenenfalls** Zugabe eines weiteren Polysiloxans (XX) oder einer Mischung von Polysiloxanen.

Die Polyorganosiloxane (X) als Bestandteil der Suspension (A) sind aufgebaut aus Einheiten der allgemeinen Formel (I)

RₐSiO_{(4-a)/2} (I)

worin
- R: gleiche oder verschiedene einwertige, Si-C - gebundene. substituierte oder unsubstituierte C₁- bis C₁₈Kohlenwasserstoffreste oder einen Hydroxylrest, und
- a: die Werte 0, 1, 2 oder 3, durchschnittlich 1,85 - 2,4, bevorzugt 1,9 - 2,1,
bedeuten, mit der Maßgabe, dass R keine in Gegenwart des verwendeten Kondensations-/Äquilibrierungskatalysators reaktiven Reste darstellt, sofern diese Reste in einer Konzentration von > 1000 ppm, bevorzugt > 700 ppm, bezogen auf die Gesamtmenge der Polyorganosiloxane (X), vorhanden sind.

Beispiele für Reste R sind Alkylreste wie beispielsweise Methyl, Ethyl, n-Propyl, i-Propyl, n-Butyl, i-Butyl, t-Butyl, n-Pentyl, i-Pentyl, neo-Pentyl, t-Pentyl, Hexyl (beispielsweise n-Hexyl), Heptyl (beispielsweise n-Heptyl), Octyl (beispielsweise n-Octyl; i-Octyl, beispielsweise 2,2,4-Trimethylpentyl), Nonyl (beispielsweise n-Nonyl), Decyl (beispielsweise n-Decyl), Dodecyl (beispielsweise n-Dodecyl), Octadecyl (beispielsweise n-Octadecyl); Alkenylreste, wie beispielsweise Vinyl, Allyl, n-Propenyl, i-Propenyl, n-Butenyl, Alkenyloxy; Cycloalkylreste wie beispielsweise Cyclopentyl, Cyclohexyl, Cycloheptyl und Methylcyclohexyl; Cycloalkenyl wie beispielsweise Cyclohexenyl; Arylreste, wie beispielsweise Phenyl, Naphtyl, Anthryl, Phenanthryl; Alkarylreste, wie beispielsweise o-, m-, p-Tolyl, -Xylyl, -Ethylphenyl; Aralkylreste wie beispielsweise Benzyl, α- und β-Phenylethyl.

Beispiele für substituierte Reste R sind Cyanalkylreste wie beispielsweise β-Cyanethyl; Halogenalkylreste wie beispielsweise 3,3,3-Trifluor-n-propyl, 2,2,2,2',2',2'-Hexafluor-i-propyl, Heptafluor-i-propyl, Chlormethyl, Bromethyl; Halogenarylreste wie beispielsweise o-, m-, p-Chlorphenyl.

Die Polyorganosiloxane (X) besitzen eine Viskosität bei 23°C von 100 bis 500.000 mPa·s, bevorzugt 500 bis 50.000 mPa·s, besonders bevorzugt 1000 bis 20.000 mPa•s.

Als Polyorganosiloxane (X) werden vorzugsweise Polydiorganosiloxane der allgemeinen Formel (II)

(R¹)ₓ(R²)₃₋ₓ SiO[Si(R²)₂O]ₘ [Si(R²) (R¹)O]ₙSi(R²)₃₋ₓ(R¹)ₓ (II)

verwendet, worin
- R¹: gleiche oder verschiedene einwertige, SiC-gebundene, ungesättigte C₁ - C₈ - Alkylreste,
- R²: gleiche oder verschiedene einwertige, SiC-gebundene, gegebenenfalls substituierte gesättigte C₁ - C₈ - Alkylreste, gegebenenfalls substituierte C₁ - C₈ - Arylreste, oder den Hydroxylrest
- m: eine Zahl von 100 bis 1200, bevorzugt 150 bis 700, besonders bevorzugt 200 bis 500,
- n: 0 oder eine Zahl von 1 bis 50
- x: 0 oder eine Zahl von 1 bis 3
bedeuten.

Innerhalb der bzw. entlang der Polysiloxanketten der allgemeinen Formel (II) können zusätzlich zu den Diorganosiloxaneinheiten [Si(R²)₂O] und [Si(R²) (R¹)O] noch andere Siloxaneinheiten vorhanden sein. Beispiele für solche anderen Siloxanheiten sind solche der Formeln (R²SiO_{3/2}), (R²₃SiO_{1/2}) und SiO_{4/2}, wobei R² jeweils die oben angegebene Bedeutung hat. Der Mengenanteil an solchen anderen Siloxaneinheiten als Diorganosiloxaneinheiten beträgt jedoch vorzugsweise maximal 10 Molprozent, insbesondere höchstens 1 Molprozent, jeweils bezogen auf das Gewicht von Polydiorganosiloxan (X).

Beispiele für die einwertigen, SiC-gebundenen, ungesättigten C₁ - C₈ - Alkylreste R¹ sind Alkenylreste wie Vinyl, Allyl, Cyclohexenyl, Alkenyloxy, bevorzugt Vinyl. Bevorzugte Beispiele für die Reste R² sind Methyl, Phenyl und 3,3,3-Trifluor-n-propyl, besonders bevorzugt Methyl. Bevorzugt hat x den Wert 0 oder 1, und n den Wert 0 oder 1 bis 5, besonders bevorzugt den Wert 0, d.h. besonders bevorzugt sind Trimethylsiloxyreste und Vinyldimethylsiloxyreste an den Kettenenden.

Es kann als Polyorganosiloxan (X) eine Art von Polydiorganosiloxan (II) wie auch ein Gemisch aus mindestens zwei verschiedenen Arten von Polydiorganosiloxan (II) eingesetzt werden.

Der Mischungsbestandteil Wasser (Y) dient in Verbindung mit dem Kondensations-/Äquilibrierungs-Katalysator (Z) zur In-situ-Herstellung von Polyorganosiloxanen (H) aus dem Polyorganosiloxan (X), welche, in einem Molekül, zumindest einen, direkt an ein Siliciumatom gebundenen Hydroxylrest aufweisen, wobei die Erzeugung der Hydroxylreste durch katalytische Spaltung der Polyorganosiloxanketten von (X) erfolgt. Die katalytische Depolymerisation/Äquilibrierung von Polyorganosiloxanen in Gegenwart von H₂O ist bekannt und beispielsweise beschrieben in Noll, W., Chemie und Technologie der Silicone, Verlag Chemie, Weinheim, 2. Auflage 1964, S. 200 - 206.

Die in einem Molekül zumindest einen, direkt an ein Siliciumatom gebundenen Hydroxylrest aufweisenden Polyorganosiloxane (H) dienen in der Folge als Behandlungsmittel für den verstärkenden Füllstoff, indem deren SiOH-Gruppen mit den auf der Füllstoffoberfläche befindlichen SiOH-Gruppen unter Kondensation und Wasserabspaltung kovalente Bindungen ausbilden. Durch diese chemischen Bindungen sowie zusätzliche intermolekulare Wechselwirkungen zwischen den freien Elektronenpaaren der Sauerstoffatome in den Polyorganosiloxanketten und weiteren auf der Füllstoffoberfläche befindlichen SiOH-Gruppen kommt es zu einer Fixierung der Polyorganosiloxanketten auf der Füllstoffoberfläche, wodurch letztere gegenüber Wechselwirkungen mit polare Gruppen tragenden Substanzen abgeschirmt wird.

Die für eine ausreichende Abschirmung der Oberfläche des in der Suspension (A) enthaltenen aktiven Füllstoffes (F) benötigte Gesamtmenge an Polyorganosiloxan (H) hängt naturgemäß von der Zusatzmenge an (F) sowie dessen BET-Oberfläche ab.

Die für die Behandlung des in der Suspension (A) enthaltenen aktiven Füllstoffes (F) verfügbare Gesamtmenge an Polyorganosiloxan (H), in situ hergestellt durch hydrolytische Spaltung des Polyorganosiloxans (X) unter Einwirkung des Katalysators (Z), wird, eine ausreichende Katalysatorkonzentration vorausgesetzt, wesentlich durch die Menge an verfügbarem Reaktionspartner Wasser bestimmt.

Die für die Erzeugung der für eine ausreichende Füllstoffbehandlung erforderlichen Gesamtmenge an Polyorganosiloxan (H) verfügbare Gesamtmenge an Wasser (Y) setzt sich aus der Menge an zugesetztem Wasser, das entweder gesondert, oder aber, als Teil- oder Gesamtmenge des zugesetzten Wassers, auch als Bestandteil des Kondensations-/Äquilibrierungskatalysators (Z) oder, in adsorbiertem Zustand, über den verstärkenden Füllstoff (F) in die Mischung eingebracht werden kann, sowie der Menge des bei der Umsetzung der SiOH-Gruppen des Polyorganosiloxans (H) mit den auf der Oberfläche des aktiven Füllstoffes (F) befindlichen SiOH-Gruppen gebildeten Kondensationswassers zusammen.

Da die Hauptmenge des für die Füllstoffbehandlung erforderlichen Polyorganosiloxans (H) unter Einwirkung des Kondensations-/Äquilibrierungskatalysators (Z) simultan in situ aus dem bei der Behandlungsreaktion entstehenden Wasser gebildet wird, reicht eine relativ geringe Anfangskonzentration an Hydroxylgruppen enthaltendem Polyorganosiloxan (H) im Polyorganosiloxan (X) am Beginn des Füllstoffeintrages aus.

Der Eintrag einer für die angestrebte Verstärkungswirkung ausreichenden Menge an verstärkendem Füllstoff in das vorgelegte Polyorganosiloxan (X) und seine vollständige Behandlung erfordert, zusätzlich zu der an der Füllstoffoberfläche adsorbierten Wassermenge von durchschnittlich 0,2 Gew.-%, die Zugabe von 0,05 - 1,5 Gew.-% H₂O, bevorzugt 0,1 - 1 Gew.-% H₂O, besonders bevorzugt 0,25 - 0,65 Gew.-% H₂O, jeweils bezogen auf die zugesetzte Menge an verstärkendem Füllstoff (F), wobei der Zusatz gesondert oder als Bestandteil des Kondensations-/Äquilibrierungskatalysators (Z) erfolgen kann.

Als Kondensations-/Äquilibrierungskatalysator (Z), d.h. sowohl für die Spaltung der Polyorganosiloxanketten von (X) als auch für die Kondensation der in Gegenwart von H₂O gebildeten Hydroxylgruppen am Polyorganosiloxan (H) mit den SiOH-Gruppen des verstärkenden Füllstoffs (F) geeignete Substanzen sind dem Fachmann seit langem bekannt und, außer in den oben zitierten Patentschriften, beispielsweise beschrieben in Noll, W., Chemie und Technologie der Silicone, Verlag Chemie, Weinheim, 2. Auflage 1964, S. 200 - 206 sowie 181 - 185.

Grundsätzlich gibt es keine technische Einschränkung bei der Wahl des Katalysators (Z), sofern dieser unter den gewählten Bedingungen ausreichend reaktiv ist, um sowohl die hydrolytische Spaltung der Ketten des Polyorganosiloxans (X) im für eine vollständige Behandlung erforderlichen Ausmaß, als auch die Kondensation der Hydroxylgruppen am entstandenen Polyorganosiloxan (H) mit den SiOH-Gruppen an der Oberfläche des verstärkenden Füllstoffs (F) zu ermöglichen.

Prinzipiell können sowohl saure als auch alkalische Katalysatoren verwendet werden, vorzugsweise jedoch solche Katalysatoren, die unter den gewählten Bedingungen zum einen eine möglichst geringe Depolymerisationswirkung und Tendenz zur Bildung niedermolekularer Polyorganocyclosiloxane aufweisen, und zum anderen vorwiegend die Kondensation der Hydroxylgruppen am entstandenen Polyorganosiloxan (H) mit den SiOH-Gruppen an der Oberfläche des verstärkenden Füllstoffs (F) gegenüber der zu einer Erhöhung des Molekulargewichtes führenden Kondensation der polyorganosiloxangebundenen Hydroxylgruppen untereinander fördern.

Eine zu starke Depolymerisationsreaktion würde naturgemäß die Eigenschaften des ursprünglich eingesetzten Polyorganosiloxans (X) hinsichtlich dessen Netzwerksbildungseigenschaften zu stark verändern, um noch die durch die gezielte Auswahl von (X) angestrebten Eigenschaften der aus den Suspensionen (A) hergestellten Polyorganosiloxanmassen zu erhalten.

Eine zu starke Kondensation der polyorganosiloxangebundenen Hydroxylgruppen untereinander und die damit verbundene Molekulargewichtserhöhung würde die Viskosität der Suspension so stark erhöhen, dass es nicht mehr möglich wäre, aus den Suspensionen (A) ausreichend fließfähige Polyorganosiloxanmassen zu formulieren.

Beispiele für grundsätzlich geeignete Katalysatoren (Z) sind Karbonsäuren (gegebenenfalls in Kombination mit ihren quaternären Ammoniumsalzen), Sulfonsäuren der allgemeinen Formel XSO₃H, worin X Alkyl, Aryl, und Alkaryl oder Halogen bedeutet, sekundäre und tertiäre Alkylamine, Alkylsulfoniumsilanolate, Alkalimetall-oxide, -hydroxide, -alkoxide, -silanolate, quaternäre Ammonium- und Phosphonium-Verbindungen etc. Bevorzugte Katalysatoren (Z) für das erfindungsgemäße Verfahren sind Alkalimetalloxide, -hydroxide, -alkoxide und -silanolate, besonders bevorzugt Natriumhydroxid, Kaliumhydroxid, Natriumtrimethylsilanolat und Kaliumtrimethylsilanolat.

Um eine für die Behandlung des verstärkenden Füllstoffs (F) ausreichende Konzentration an Hydroxylgruppen enthaltendem Polyorganosiloxan (H) im Einarbeitungszeitraum zu gewährleisten, wird eine Zusatzmenge an Kondensations-/Äquilibrierungs-Katalysator (Z) von 0,05 - 5 Gew.-%, bevorzugt 0,1 - 3,5 Gew.-%, besonders bevorzugt 0,5 - 2,5 Gew.-%, jeweils bezogen auf die zugesetzte Menge an verstärkendem Füllstoff (F), benötigt. Die für die Behandlung des verstärkenden Füllstoffs (F) verfügbare Konzentration an Hydroxylgruppen enthaltendem Polyorganosiloxan (H) bei Beginn der Zugabe des verstärkenden Füllstoffs (F) hängt außer von der Art und Menge des Kondensations-/Äquilibrierungskatalysators (Z) auch von der Temperatur des Gemisches aus Polyorganosiloxan (X), Wasser (Y) und Katalysator (Z) sowie der Einwirkungsdauer des Katalysators auf die Polyorganosiloxan-/Wasser-Mischung ab.

Liegt der SiOH-Gehalt des Polyorganosiloxans (X) unter 100 ppm und/oder beträgt der Anteil an zu behandelndem verstärkenden Füllstoff (F) mehr als 30 Gew.-%, bezogen auf das Polyorganosiloxan (X), und/oder weist (F) einen Feuchtigkeitsgehalt unter 0,1 Gew.-% auf, ist es vorteilhaft, das Gemisch aus Polyorganosiloxan (X), Wasser (Y) und Katalysator (Z) für eine Dauer von 15 Minuten bis 120 Minuten, bevorzugt 60 Minuten, bei einer Temperatur zwischen 50°C und 180°C, bevorzugt zwischen 90°C und 170°C, besonders bevorzugt zwischen 120°C und 150°C vorzureagieren.

Bei einer bevorzugten Ausführungsart des erfindungsgemäßen Verfahrens wird im Schritt (1) die gesamte Einsatzmenge eines Polyorganosiloxans (X) oder einer Mischung von zwei oder mehreren Polyorganosiloxanen (X) mit der gesamten Menge an Katalysator (Z) vermischt und der verstärkende Füllstoff (F) ohne Vorreaktion der Mischung eingemischt. Bei einer anderen bevorzugten Ausführungsart des erfindungsgemäßen Verfahrens wird im Schritt (1) die gesamte Einsatzmenge eines Polyorganosiloxans (X) oder einer Mischung von zwei oder mehreren Polyorganosiloxanen (X) mit der gesamten Menge an Katalysator (Z) vermischt und vor der Zugabe des verstärkenden Füllstoffs (F) wie vorstehend beschrieben vorreagiert. Bei einer anderen bevorzugten Ausführungsart des erfindungsgemäßen Verfahrens wird im Schritt (1) eine Teilmenge der gesamten Einsatzmenge eines Polyorganosiloxans (X) oder einer Mischung von zwei oder mehreren Polyorganosiloxanen (X) mit der gesamten Menge an Katalysator (Z) vermischt und wie vorstehend beschrieben vorreagiert. Danach wird das Reaktionsgemisch auf unter 120°C, vorzugsweise auf unter 100°C abgekühlt, und die restliche Teilmenge der gesamten Einsatzmenge eines Polyorganosiloxans (X) oder der Mischung von zwei oder mehreren Polyorganosiloxanen (X) eingemischt, bevor der verstärkende Füllstoff (F) zugegeben wird.

Das Vermischen des Polyorganosiloxans (X), des Wassers (Y) und des Kondensations-/Äquilibrierungskatalysators (Z) im Schritt (1) sowie gegebenenfalls die Vorreaktion dieser Mischung im Schritt (2) wird vorzugsweise in demselben Mischgerät vorgenommen, in dem in der Folge im Schritt (3) die Zugabe und im Schritt (4) die In-situ-Behandlung des verstärkenden Füllstoffs (F) sowie in Schritt (5) die Deaktivierung des Katalysators (Z) und gegebenenfalls im Schritt (7) die Zugabe eines weiteren Polyorganosiloxans (XX) oder einer Mischung von Polyorganosiloxanen erfolgt.

Um eine vollständige Behandlung unter ausreichender mechanischer Aufschließung von Sekundär- und Tertiärstrukturen des verstärkenden Füllstoffs (F) sowie eine ausreichend homogene und hochdisperse Verteilung der behandelten Füllstoffpartikel unter Vermeidung von gelartigen Füllstoff-/Polyorganosiloxanaggregaten zu erreichen, erfolgt die Einarbeitung und Behandlung des verstärkenden Füllstoffs (F) vorzugsweise unter möglichst hoher mechanischer Scherung. Diese kann entweder durch Rühren der Mischung mittels einer schnell laufenden Zahnscheibe oder aber durch Kneten der Mischung in möglichst steifer Phase erfolgen.

Beispiele für geeignete Mischgeräte sind Planetendissolvermischer, die einen oder mehrere Planetenmischarme sowie eine oder mehrere hochtourige Zahnscheiben in Kombination mit heiz- und kühlbaren Mischkesseln aufweisen, Mischkneter mit heiz- und kühlbarem Trog und zwei gleich- oder gegenläufigen, gegebenenfalls heiz- und kühlbaren Knetschaufeln, Innenmischer, kontinuierliche Mischextruder oder andere diskontinuierliche oder kontinuierliche Geräte mit vergleichbar intensiver Mischwirkung und Temperaturregulierung. Vorzugsweise weist das Mischgerät die Möglichkeit zur kontinuierlichen Spülung des Innenraums mit Inertgas, beispielsweise Stickstoff, sowie zur Beaufschlagung mit Vakuum während bestimmter Phasen des Mischprozesses auf.

Beispiele für den genannten verstärkenden Füllstoff (F) mit einer spezifischen Oberfläche (BET) von mindestens 40 m²/g sind pyrogene Kieselsäure, gefällte Kieselsäure, Siliciumaluminiummischoxide und pyrogenes Titandioxid. Bevorzugt ist pyrogene und gefällte Kieselsäure mit einer spezifischen Oberfläche (BET) von 50 - 400 m²/g, besonders bevorzugt von 90 - 300 m²/g. Der genannte Füllstoff (F) kann hydrophobiert sein, beispielsweise durch die Behandlung mit Organosilanen, -silazanen oder -siloxanen, ist jedoch vorzugsweise hydrophil. Es kann nur eine Art von Füllstoff (F), oder aber ein Gemisch von zwei oder mehreren Füllstoffen (F) eingesetzt werden. Der Füllstoff kann in Mengen von 10 - 100 Gew.-%, bezogen auf das Polyorganosiloxan (X), eingesetzt werden, bevorzugt von 20 - 80 Gew.-%, besonders bevorzugt von 30 - 40 Gew.-%.

Die Zugabe der Gesamtmenge des verstärkenden Füllstoffs (F) im Schritt (3) erfolgt bevorzugt portionsweise derart, dass die zugesetzte Füllstoff-Teilmenge ohne Kühlung vollständig in die Mischung eingearbeitet ist, bevor die nächste Teilmenge zugesetzt wird. Nach Zugabe der gesamten Füllstoffmenge wird in Schritt (4) das Polyorganosiloxan-/Füllstoff-/KatalysatorGemisch über eine Dauer von 15 Minuten bis 10 Stunden, bevorzugt von 1 Stunde bis 5 Stunden, besonders bevorzugt zwischen 2 und 3 Stunden, bei einer Temperatur zwischen 120°C und 180°C, bevorzugt zwischen 140°C und 160°C, mit höchster Mischerleistung gemischt.

Die Deaktivierung des Kondensations-/Äquilibrierungskatalysators (Z) im Schritt (5) erfolgt, falls es sich bei (Z) um eine Säure handelt, mittels einer Base, oder, falls (Z) eine Base ist, mittels einer Säure, wobei in beiden Fällen jeweils so viel Base bzw. Säure zugesetzt wird, dass eine vollständige Deaktivierung der Base bzw. Säure durch Bildung des entsprechenden Salzes gewährleistet ist. Vorzugsweise wird bei der Deaktivierung des Kondensations-/Äquilibrierungskatalysators (Z) ein Deaktivierungsmittel (DA) vergleichbarer Basen- bzw. Säurestärke verwendet. Handelt es sich bei (Z) um eine starke Säure, wird bevorzugt mit einer starken Base deaktiviert, handelt es sich bei (Z) um eine starke Base, wird bevorzugt mit einer starken Säure deaktiviert. Gleiches gilt sinngemäß für schwache Säuren bzw. Basen. Dies stellt sicher, dass die Dissoziation der bei der Deaktivierung gebildeten Salze bei Einwirkung von Feuchtigkeit zu einer Reaktion im Neutral- bzw. im nur schwach sauren bzw. schwach basischen Bereich führt, während bei Deaktivierung eines stark sauren Kondensations-/Äquilibrierungskatalysators (Z) mit einer schwachen Base im Falle der Hydrolyse eine Verschiebung in den deutlich sauren Bereich, bei Deaktivierung eines stark basischen Kondensations-/Äquilibrierungskatalysators (Z) mit einer schwachen Säure im Falle der Hydrolyse eine Verschiebung in den deutlich basischen Bereich eintreten würde. Im Falle der Bildung neutraler Salze, die keine Pufferwirkung ausüben, kann bei Verwendung nicht- oder schwerflüchtiger Deaktivierungsmittel (DA) bereits eine Zusatzmenge, die nur unwesentlich über oder unter der für die Neutralisation tatsächlich erforderlichen Menge liegt, zu einem unerwünscht deutlichen Abweichen vom Neutralpunkt führen.

Neben der besonders bevorzugten Verwendung eines für die nachträgliche Entfernung eines zugesetzten Überschusses ausreichend flüchtigen Deaktivierungsmittels (DA) besteht eine bevorzugte Ausführung des Deaktivierungsprozesses (5) im Zusatz eines nicht- oder schwerflüchtigen Deaktivierungsmittels (DA) im Unterschuss in Kombination mit einem flüchtigen Deaktivierungsmittel (DA), so dass sich in Summe ein Überschuss an Deaktivierungsmittel (DA) in der Mischung befindet, wobei der Überschuss ausschließlich aus flüchtigem Deaktivierungsmittel (DA) besteht, welcher nach Beendigung des Deaktivierungsprozesses durch Hitzebehandlung der Mischung unter Spülung mit einem Inertgas oder vorzugsweise unter vermindertem Druck aus der Mischung entfernt wird.

Besonders bevorzugte schwerflüchtige Deaktivierungsmittel (DA) für die besonders bevorzugten Katalysatoren (Z) Natriumhydroxid, Kaliumhydroxid, Natriumtrimethylsilanolat und Kaliumtrimethylsilanolat sind Methansulfonsäure und Methansulfonsäuretrimethylsilylester. Besonders bevorzugte flüchtige Deaktivierungsmittel (DA) für die besonders bevorzugten Katalysatoren (Z) Natriumhydroxid, Kaliumhydroxid, Natriumtrimethylsilanolat und Kaliumtrimethylsilanolat sind Substanzen, die als Reaktionsprodukt ein Alkalimetallhalogenid als neutrales Salz bilden, also Halogenwasserstoffe sowie gegebenenfalls substituierte Organohalogensilane oder -siloxane, besonders bevorzugt gegebenenfalls substituierte Organohalogensilane mit einem Siedepunkt bei 1013 hPa zwischen 55°C und 140°C, jeweils allein oder in Kombination verwendet. Beispiele für besonders bevorzugte Organohalogensilane sind Trimethylchlorsilan, Vinyldimethylchlorsilan, Dimethyldichlorsilan, Diethyldichlorsilan, Chlormethyldimethylchlorsilan und Chlormethylmethyldichlorsilan.

Weitere besonders bevorzugte flüchtige Deaktivierungsmittel (DA) sind Ameisensäure und Essigsäure.

Vor dem Zusatz des Deaktivierungsmittels (DA) wird die Mischung auf unter 120°C gekühlt. Die zur Neutralisation erforderliche Menge des Deaktivierungsmittels (DA) wird homogen eingemischt, bevorzugt in mehreren über die Deaktivierungsphase verteilten Portionen. Die für die jeweilige Suspension (A) erforderliche Menge an Deaktivierungsmittel (DA) wird vorzugsweise experimentell ermittelt. Dies kann beispielsweise durch alkalimetrische bzw. azidimetrische Messung des Säure- bzw. Base-Gehalts oder mittels eines im entsprechenden Bereich umschlagenden Säure-/Base-Indikators erfolgen.

Nach dem Deaktivierungsschritt wird vorzugsweise eine Entfernung flüchtiger Bestandteile, die sich durch Einwirkung des Kondensations-/Äquilibrierungskatalysators (Z) während des Prozesses gebildet haben, durch Ausheizen der Suspension (A) im Inertgasstrom und/oder unter reduziertem Druck im Temperaturbereich zwischen 80°C und 180°C, vorzugsweise zwischen 120°C und 150°C, vorgenommen.

Suspensionen von verstärkenden Füllstoffen in Polyorganosiloxanen neigen mit steigendem Füllstoffgehalt aufgrund von verstärkter Füllstoff-/Polymerwechselwirkung zunehmend dazu, bei Lagerung in ihrer Viskosität anzusteigen, selbst wenn der Füllstoff vorher behandelt wurde. Es ist daher vorteilhaft, solche die Ausgangsbasis von anwendungsfertigen Polyorganosiloxanzubereitungen bildenden Suspensionen, falls sie vor ihrer Weiterverarbeitung zwischengelagert werden sollen, zur Verringerung dieses unerwünschten Viskositätsanstieges mit weiterem Polyorganosiloxan (XX) oder einer Mischung von Polyorganosiloxanen (XX) abzumischen, wobei das oder die Polyorganosiloxane (XX) Rezepturbestandteile der auf den Suspensionen (A) basierenden anwendungsfertigen Polyorganosiloxanzubereitungen darstellen, d.h. von der Fertigmasse in die Polymer-/Füllstoff-Suspension übernommen werden.

Art, Eigenschaften und Einsatzmenge der Polyorganosiloxane (XX) werden auch vom gewählten Vernetzungssystem der anwendungsfertigen Polyorganosiloxanzubereitungen mitbestimmt. Die Polyorganosiloxane (XX) oder Mischungen von Polyorganosiloxanen (XX) können jeweils in Art und Eigenschaften sowohl identisch mit den Polyorganosiloxanen (X) als auch von ihnen verschieden sein, und können im jeweiligen Vernetzungssystem sowohl reaktiv als auch nicht reaktiv sein.

Die Polyorganosiloxane (XX) als optionaler Bestandteil der Suspension (A) sind aufgebaut aus Einheiten der allgemeinen Formel

RₐSiO_{(4-a)/2} (III)

worin
- R: gleiche oder verschiedene einwertige, Si-C - gebundene, substituierte oder unsubstituierte C₁- bis C₁₈ - Kohlenwasserstoffreste, den Hydroxylrest oder Wasserstoffrest, und
- a: die Werte 0, 1, 2 oder 3, durchschnittlich 1,85 - 2,4,
bedeuten.

Beispiele für die Reste R sowie für die substituierten Reste R sind identisch wie in Formel (I). Die Polyorganosiloxane (XX) besitzen eine Viskosität bei 23°C von 10 bis 500.000 mPa•s, bevorzugt 100 bis 20.000 mPa•s, besonders bevorzugt 200 bis 10.000 mPa•s. Als Polyorganosiloxane (XX) werden vorzugsweise Polydiorganosiloxane der allgemeinen Formel (IV)

(R¹)ₓ(R²)₃₋ₓSiO[Si(R²)₂O)ₘ [Si(R²)(R¹)O]ₙ Si(R²)₃₋ₓ(R¹)ₓ (IV)

verwendet, worin
- R¹: gleiche oder verschiedene einwertige, SiC-gebundene, ungesättigte C₁ - C₈ - Alkylreste, kondensierbare oder hydrolysierbare Reste,
- R²: gleiche oder verschiedene einwertige, SiC-gebundene, gegebenenfalls substituierte gesättigte C₁ - C₁₈ - Alkylreste, gegebenenfalls substituierte C₁ - C₁₈ - Arylreste,
- m: 0 oder eine Zah1 von 1 bis 1500, bevorzugt 0 bis 1000, besonders bevorzugt 0 bis 600
- n: 0 oder eine Zahl von 1 bis 50
- x: 0 oder eine Zahl von 1 bis 3
bedeuten.

Innerhalb der bzw. entlang der Polysiloxanketten der allgemeinen Formel (IV) können zusätzlich zu den Diorganosiloxaneinheiten [Si(R²)₂O] und [Si(R²) (R¹)O] noch andere Siloxaneinheiten vorhanden sein. Beispiele für solche anderen Siloxanheiten sind solche der Formeln (R²SiO_{3/2}), (R²₃SiO_{1/2}) und SiO_{4/2}, wobei R² jeweils die oben angegebene Bedeutung hat. Der Mengenanteil an solchen anderen Siloxaneinheiten als Diorganosiloxaneinheiten beträgt jedoch vorzugs-weise maximal 10 Molprozent, insbesondere höchstens 1 Molprozent, jeweils bezogen auf das Gewicht von Polydiorganosiloxan (XX). Beispiele für die einwertigen, SiC-gebundenen, ungesättigten C₁ - C₈ - Alkylreste R¹ sind Alkenylreste wie Vinyl, Allyl, Cyclohexenyl, Alkenyloxy, wobei Vinyl bevorzugt ist. Beispiele für kondensierbare Reste R¹ sind Hydroxy, Wasserstoff und Halogen, bevorzugt Chlor.

Beispiele für hydrolysierbare Reste R¹ sind Alkoxyreste wie beispielsweise Methoxy, Ethoxy, n-Propoxy, iso-Propoxy, n-Butoxy, Methoxyethoxy; Alkenyloxyreste wie beispielsweise Isopropenyloxy, Isobutenyloxy, 1-Ethyl-2-methylvinyloxy; Acyloxyreste wie beispielsweise Acetoxy, Propionoxy, Butyloxy, Benzoyloxy, 2-Ethylhexanoyloxy; Iminoxyreste wie beispielsweise Dimethylketoxim, Methylethylketoxim, Diethylketoxim, Cyclopentanoxim, Cyclohexanoxim; Aminoreste wie beispielsweise N-Methylamino, N-Ethylamino, N-Butylamino, N,N-Dimethylamino, N,N-Diethylamino, Cyclohexylamino; Amidoreste wie beispielsweise N-Methylacetamid, N-Ethylacetamid, N-Methylbenzamid; Aminoxyreste wie beispielsweise N,N-Dimethylaminoxy, N,N-Diethylaminoxy, N,N-Diphenylaminoxy.

Bevorzugte Beispiele für Reste R² sind C₁ - C₈ - Alkylreste, besonders bevorzugt Methyl, Vinyl und Phenyl. Bevorzugt hat x den Wert 0 oder 1. Es kann als Polyorganosiloxan (XX) eine Art von Polydiorganosiloxan (IV) wie auch ein Gemisch aus mindestens zwei verschiedenen Arten von Polydiorganosiloxan (IV) eingesetzt werden.

Eine bevorzugte Ausführungsform der nach dem erfindungsgemäßen Verfahren hergestellten fließfähigen, vernetzbaren Polyorganosiloxanmassen sind kondensationsvernetzende Polyorganosiloxanmassen, dadurch gekennzeichnet, dass man zu ihrer Herstellung
(AA) die Suspension (A), hergestellt nach dem vorstehend beschriebenen Verfahren, wobei diese gegebenenfalls Polyorganosiloxan (XX) enthalten kann, das kondensierbare oder hydrolysierbare Gruppen gemäß der allgemeinen Formel (IV) aufweisen kann,
(BB) **gegebenenfalls** ein Polyorganosiloxan oder ein Gemisch aus mehreren Polyorganosiloxanen (XX), das kondensierbare oder hydrolysierbare Gruppen gemäß der allgemeinen Formel (IV) aufweist, wobei der Rezepturbestandteil (BB) dann obligatorisch ist, wenn (AA) kein Polyorganosiloxan (XX) enthält, das kondensierbare oder hydrolysierbare Gruppen gemäß der allgemeinen Formel (IV) aufweist,
(CC) **gegebenenfalls** einen oder mehrere Vernetzer, ausgewählt aus
   - einem Organosilan der allgemeinen Formel

      R²_{4-b} SiR¹_{b} (V),

      worin
      - R¹: gleich oder verschieden sein können, und dieselben hydrolysierbaren Reste R¹ sein können wie in der allgemeinen Formel (IV),
      - R²: gleich oder verschieden sein können, und dieselben Reste R² sein können wie in der allgemeinen Formel (IV) und
      - b: eine ganze Zahl von 2 bis 4
      bedeutet,
   - ein oder mehrere teilhydrolysierte Reaktionsprodukte aus Organosilanen gemäß der allgemeinen Formel (V), wobei der Rezepturbestandteil (CC) dann obligatorisch ist, wenn es sich bei dem in Rezepturbestandteil (AA) oder (BB) enthaltenen Polyorganosiloxan (XX) um ein hydroxyfunktionelles Polyorganosiloxan, bevorzugt α,ω-Dihydroxypolyorganosiloxan, handelt,
(DD) einen im Kondensationssystem wirksamen Vernetzungskatalysator
(EE) **gegebenenfalls** ein Polyorganosiloxan oder ein Gemisch aus mehreren Polyorganosiloxanen (XX), das keine kondensierbaren oder hydrolysierbaren Gruppen gemäß der allgemeinen Formel (IV) aufweist, bevorzugt α,ω-Bis(trialkylsiloxy)polyorganosiloxan, wobei der Trialkylsiloxyrest bevorzugt ein Trimethylsiloxy- oder Vinyldimethylsiloxyrest ist,
(FF) **gegebenenfalls** einen oder mehrere nicht verstärkende oder teilverstärkende Füllstoffe,
(GG) **gegebenenfalls** ein oder mehrere polare Additive,
(HH) **gegebenenfalls** weitere Zusatzstoffe und
(JJ) **gegebenenfalls** Wasser
vermischt.

Konkrete Beispiele für die als Vernetzer (CC) für die nach dem erfindungsgemäßen Verfahren hergestellten fließfähigen, kondensationsvernetzenden Polyorganosiloxanmassen geeigneten Organosilane der allgemeinen Formel (V) sind Methyltrimethoxysilan, Chlormethyltrimethoxysilan, Ethyltrimethoxysilan, Propyltrimethoxysilan, Vinyltrimethoxysilan, Phenyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan, Tetra-i-propoxysilan, Tetra-n-butoxysilan, Methyltris(i-propenoxy)silan, Vinyltris(i-propenoxy)silan, Vinyltris(methoxyethoxy)silan, Methyltriacetoxysilan, Ethyltriacetoxysilan, Vinyltriacetoxysilan, Phenyltriacetoxysilan, Methyltris(methylethylketoximo)silan, Vinyltris(methylethylketoximo)silan, Bis(N-Methylbenzamido)ethoxymethylsilan, Tris(cyclohexylamino)methylsilan.

Konkrete Beispiele für teilhydrolysierte Reaktionsprodukte aus Organosilanen, wie unter der allgemeinen Formel (V) aufgeführt, die oft durch ihren Gehalt an SiO₂ in Gew.-% beschrieben werden, sind Hexamethoxydisiloxan, Hexaethoxydisiloxan, Hexa-n-propoxydisiloxan, Hexa-n-butoxydisiloxan, Octamethoxytrisiloxan, Octaethoxytrisiloxan, Octa-n-butoxytrisiloxan, Decamethoxytetrasiloxan, Decaethoxytetrasiloxan, 1,3,5,7-Tetramethoxy-1,3,5,7-Tetramethylcyclotetrasiloxan, 1,3,5,7-Tetraethoxy-1,3,5,7-Tetramethylcyclotetrasiloxan.

Die Vernetzer (CC) werden in einem Mengenanteil, bezogen auf das Polyorganosiloxan (XX), von 2 bis 50 Gew.-%, bevorzugt 5 bis 20 Gew.-%, besonders bevorzugt 1 bis 10 Gew.-%, in den erfindungsgemäßen Polyorganosiloxanzubereitungen eingesetzt.

Konkrete Beispiele für die als Vernetzungskatalysatoren (DD) für die nach dem erfindungsgemäßen Verfahren hergestellten fließfähigen, kondensationsvernetzenden Polyorganosiloxanmassen geeigneten Verbindungen sind u.a. Organozinnverbindungen, wie beispielsweise Zinndi-2-ethylhexoat, Zinndi-2,2-dimethyloctoat (Zinndiversatat®) Dimethylzinndiacetat, Dimethylzinndi-2-ethylhexoat, Dimethylzinndi-2,2-dimethyloctoat (Dimethylzinndiversatat®), Dimethylzinndilaurat, Dimethylzinnhydroxyoleat, Dimethylzinndistearat, Dimethylzinndimaleinat, Dimethylzinndioleat, Di-n-butylzinndiacetat, Di-n-butylzinndi-2-ethylhexoat, Di-n-butylzinndi-2,2-dimethyloctoat (Di-n-butylzinndiversatat®), Di-n-butylzinndilaurat, Di-n-butylzinndistearat, Di-n-butylzinndimaleinat, Di-n-butylzinndi-2-ethylhexylmaleinat, Di-n-butylzinndibenzylmaleinat, Di-n-butylzinndioleat, Di-n-butylzinndi-2,4-pentandionat, Di-n-butylzinndimethoxid, Di-n-butylzinnchlorbutoxid, Di-n-octylzinndiacetat, Di-n-octylzinndi-2-ethylhexoat, Di-n-octylzinn-di-2,2-dimethyloctoat (Di-n-octylzinndiversatat®), Di-n-octylzinndimaleinat und Di-n-octylzinndilaurat, bevorzugt Di-n-butylzinndi-2-ethylhexoat, Di-n-butylzinndiacetat, Di-n-butylzinndi-2,2-dimethyloctoat (Di-n-butylzinnversatat®), Di-n-butylzinndilaurat, Di-n-octylzinn-di-2-ethylhexoat, Di-n-octylzinndimaleinat, Di-n-octylzinndi-2,2-dimethyloctoat Di-n-octylzinndiversatat®) und Di-n-octylzinndilaurat; Reaktionsgemische von Organozinnverbindungen mit unter (CC) aufgeführten Silanen oder unter (CC) aufgeführten teilhydrolysierten Produkten von Silanen, wie beispielsweise Umsetzungsprodukte von Tetraethoxysilan bzw. Hexaethoxydisiloxan bzw. Ethoxyoligosiloxan mit ca. 40 Gew.-% SiO₂ bzw. Tetra-n-propoxy-silan bzw. Tetra-n-butoxysilan mit Di-n-butylzinndiacetat bzw. Di-n-octylzinndiacetat bzw. Di-n-butylzinndilaurat bzw. Di-n-octylzinndilaurat, bevorzugt Umsetzungsprodukte von Tetraethoxysilan mit Di-n-butylzinndiacetat, von Hexaethoxydisiloxan mit Di-n-butylzinndiacetat, von Tetra-n-propoxysilan mit Di-n-butylzinndiacetat, von Tetra-n-butoxysilan mit Di-n-butylzinndiacetat, von Tetraethoxysilan mit Di-n-butylzinndilaurat, von Hexaethoxydisiloxan mit Di-n-butylzinndilaurat, von Tetra-n-propoxysilan mit Di-n-butylzinndilaurat und von Tetraethoxysilan mit Di-n-octylzinndiacetat; Organotitanverbindungen wie beispielsweise Tetraethyltitanat, Tetra-i-propyltitanat, Tetra-n-butyltitanat, Tetra-2-ethylhexyltitanat, Tetrakis(trimethylsilyl)titanat, Bis(diacetylacetonato)di-i-propoxytitan, Bis(2,4-pentandionato)di-i-propoxytitan und Bis(2,4-pentandionato)di-n-butoxytitan; andere Organometallverbindungen wie beispielsweise Aluminiumalkoxylate, Eisen-2-ethylhexoat, Eisenstearat, Kobalt-2-ethylhexoat, Kobaltnaphtenat, Mangan-2-ethylhexoat, Zink-2-ethylhexoat, Zinkstearat, Zinknaphtenat und Blei-2-ethylhexoat; Alkalimetallsalze von Fettsäuren wie beispielsweise Lithiumoxalat; Natriumacetat und Kaliumacetat; Aminverbindungen wie beispielsweise Dibutylamin, Hexylamin, Octadecylamin; quaternäre Ammoniumsalze, wie beispielsweise Benzyltriethylammoniumacetat; Dialkylhydroxylamine wie beispielsweise Dimethylhydroxylamin und Diethylhydroxylamin; aminoalkylsubstituierte Alkoxysilane, wie beispielsweise 3-Aminopropyltrimethoxysilan, 3-Aminopropyltriethoxysilan und N-β-(aminoethyl)-γ-aminopropyltrimethoxysilan; guanidylsubstituierte Silane und Siloxane wie beispielsweise Tetramethylguanidylpropyltrimethoxysilan, Tetramethylguanidylpropylmethyldimethoxysilan und Tetramethylguanidylpropyltris(trimethylsiloxy)silan.

Die Katalysatoren (DD) können einzeln oder in Abmischung zum Einsatz kommen, und zwar in einem Mengenanteil, bezogen auf das Polyorganosiloxan (XX) mit kondensier- oder hydrolysierbaren Resten, von 0,001 bis 10 Gew.-%, bevorzugt 0,01 bis 5 Gew.-%.

Die für die nach dem erfindungsgemäßen Verfahren hergestellten fließfähigen, kondensationsvernetzenden Polyorganosiloxanmassen geeigneten nicht verstärkenden oder teilverstärkenden Füllstoffe (FF) weisen vorzugsweise Partikelgrößen zwischen 0,05 µm und 300 µm auf, besonders bevorzugt zwischen 0,1 µm und 50 µm sowie für Faser-Füllstoffe zwischen 50 µm und 200 µm.

Konkrete Beispiele für die nicht verstärkenden oder teilverstärkenden Füllstoffe (FF) sind Quarzmehl, Cristobalitmehl, Diatomeenerde, Glimmer, Aluminiumsilikate, Magnesium-Aluminium-Silikate, Kalziummetasilikate (Wollastonite), Zirkonsilikate, Kalziumkarbonat, Magnesiumkarbonat, Zinkkarbonat, Aluminiumhydroxid, Aluminiumoxid, Eisenoxide, Titanoxid, Zinkoxid, Zirkonoxid, Magnesiumsulfat, Gips, Annalin, Bariumsulfat, Borkarbid, Aluminiumnitrid, Bornitrid, Graphit, Kohlefasern, Metallpulver (wie beispielsweise Aluminium, Kupfer, Silber, Gold), Glasfasern oder Glashohlkugeln. Die Oberfläche der Füllstoffe (FF) kann unbehandelt oder behandelt sein, wobei die Behandlung beispielsweise mit hydrophobierenden Organosiliciumverbindungen, bevorzugt Alkoxysilanen, Organopolysiloxanen oder Fettsäuren erfolgt sein kann.

Die Füllstoffe (FF) können sowohl einzeln als auch in Kombination miteinander und/oder untereinander eingesetzt werden, wobei Art und Menge der verwendeten Füllstoffe so zu wählen sind, dass die erfindungsgemäßen kondensationvernetzenden Polyorganosiloxanzubereitungen eine fließfähige Konsistenz, d.h. eine Viskosität von maximal 500.000 mPa•s, bevorzugt maximal 100.000 mPa•s, besonders bevorzugt maximal 60.000 mPa•s, aufweisen.

Der gesamte Mengenanteil an Füllstoff (FF) beträgt vorzugsweise 1 bis 80 Gew.-%, besonders bevorzugt 5 bis 50 Gew.-%.

Die polaren Additive (GG) im Rahmen der vorliegenden Erfindung sind dadurch gekennzeichnet, dass sie aufgrund ihrer ausgeprägten Polarität sowohl mit noch vorhandenen und sterisch zugänglichen SiOH-Gruppen auf der Kieselsäureoberfläche als auch mit verfahrensbedingt noch im System vorhandenen Resten polarer Füllstoff-Behandlungsmittel bzw. deren Reaktionsprodukten in Wechselwirkung treten, wodurch es zu einem mehr oder weniger starken Verdickungs- bzw. Thixotropieeffekt kommt, der bis zum völligen Verlust der Fließfähigkeit bei der ursprünglich fließfähigen Kautschukmasse führen kann. Die Füllstoffbehandlung nach dem erfindungsgemäßen Verfahren führt jedoch zu einer so hohen Abschirmung der Kieselsäureoberfläche, dass die Wechselwirkung mit solchen polaren Additiven zu gering ist, um einen deutlichen Anstieg der Viskosität oder gar einen Verlust der Fließfähigkeit bewirken zu können.

Beispiele für derartige polare Additive (GG) sind allgemein bekannte Produkte wie beispielsweise Antistatika und Hydrophilmodifier, Haftvermittler, Trenn-, Gleit- oder Hydrophobiermittel.

Beispiele für als Antistatika und Hydrophilmodifier geeignete Additive (GG) sind nichtionische, amphotere, anionische und kationische Tenside. Beispiele für nichtionische Tenside sind Alkylpolyglykolether, polyalkoxylierte Fettalkohole und Alkylphenole, polyalkoxylierte Fettsäuren und deren Ester, polyalkoxylierte Fettsäureamine und -amide, Alkylpolyglukoside, N-Methylglukamid, Sorbitanfettsäureester, Ethylenoxid(EO)/Propylenoxid(PO)-Blockcopolymere, Ethylendiamin/EO/PO-Blockcopolymere, Copolymere aus (A) Diorganosiloxy- sowie (B) Alkylenoxid-Blöcken in der Kette vom Typ ABA, BAB oder (AB)ₓ , Polyorganosiloxan-Copolymere mit Alkylenoxid-Blöcken oder Polyolen in der Seitenkette oder am Kettenende. Beispiele für amphotere Tenside sind Alkylaminokarbonsäuren, Betaine, wie beispielsweise Alkylamidopropylbetaine und Alkyldimethylcarboxymethylbetaine, sowie Sulfobetaine wie beispielsweise Alkyltrimethylsulfobetaine.

Beispiele für anionische Tenside sind die Alkalimetallsalze, bevorzugt Natriumsalze, von Olefinsulfonaten, Alkylsulfonaten, Alkarylsulfonaten, Alkylsulfaten, Alkylethersulfaten, Alkarylethersulfaten, Polyglykolethersulfaten, Alkylsulfosuccinaten, Alkylaminsulfosuccinamaten, Phosphorsäuremono- und dialkylestern, Phosphorsäurediestern von polyalkoxylierten Fettalkoholen und Polyethylenglykol, Phosphorsäuremono-,-di -und -triestern von polyalkoxylierten Fettalkoholen, Alkylpolyoxyalkylenkarbonsäuren sowie die Kalziumsalze von Alkylbenzylsulfonaten.

Beispiele für kationische Tenside sind quaternäre Ammoniumverbindungen wie beispielsweise Alkyltrimethylammoniumchloride, Alkylbenzyldimethylammoniumchloride, Dialkyldimethylammoniumchloride und Diacyloxyethylhydroxyethylmethylammoniummethylsulfate.

Bevorzugt als Antistatika und Hydrophilmodifier für die nach dem erfindungsgemäßen Verfahren hergestellten fließfähigen, kondensationsvernetzenden Polyorganosiloxanmassen sind anionische Tenside, besonders bevorzugt die Natriumsalze von Phosphorsäuremono- und -dialkylestern, Phosphorsäurediestern von polyalkoxylierten Fettalkoholen und Polyethylenglykol und Phosphorsäuremono-,-di -und -triestern von polyalkoxylierten Fettalkoholen, beispielsweise das Natriumsalz des Phosphorsäureesters von Laurylethoxylat mit 2 EO-Gruppen und Polyethylenglykol. Die anionischen Tenside weisen Viskositäten von 50 bis 2000 mPa.s, bevorzugt 100 bis 1000 mPa·s auf.

Beispiele für als Haftvermittler geeignete Additive (GG) sind funktionelle Silane wie beispielsweise N-(2-Aminoethyl)-3-aminopropyltrimethoxysilan, N-(2-Aminoethyl)-3-aminopropylmethyldimethoxysilan, N-(2-Aminoethyl)-3-aminopropyltriethoxysilan, 3-Aminopropyltrimethoxysilan, 3-Aminopropyltriethoxysilan, 2-(3,4-Epoxycyclo-hexyl)ethyltrimethoxysilan, 2-(3,4-Epoxycyclohexyl)ethyltriethoxysilan, 3-(2,3-Epoxypropoxy)propyltrimethoxy-silan und 3-(2,3-Epoxypropoxy)propyltriethoxysilan, bevorzugt N-(2-Aminoethyl)-3-aminopropyltrimethoxysilan, N-(2-Aminoethyl)-3-aminopropylmethyldimethoxysilan, N-(2-Aminoethyl)-3-aminopropyltriethoxysilan, 3-Aminopropyltrimethoxysilan und 3-Aminopropyltriethoxysilan.

Beispiele für als Trenn-, Gleit- oder Hydrophobiermittel geeignete Additive (GG) mit einem Ausschwitzeffekt aus dem vulkanisierten Siliconkautschuk sind arylhaltige Polyorganosiloxane der allgemeinen Formel (VI)

R³(R⁴₂SiO)ₙSiR⁴₂R³ (VI)

worin
- R³: gleiche oder verschiedene einwertige, SiC-gebundene, gegebenenfalls substituierte C₁ - C₈ - Alkylreste, bevorzugt Methyl und Vinyl, gegebenenfalls substituierte C₁ - C₈ - Arylreste, bevorzugt Phenyl,
- R⁴: gleiche oder verschiedene einwertige, SiC-gebundene, gegebenenfalls substituierte C₁ - C₈ - Alkylreste, bevorzugt Methyl und Vinyl, gegebenenfalls substituierte C₁ - C₈ - Arylreste, bevorzugt Phenyl, wobei 10 bis 45 Mol-% der R⁴-Reste Arylreste, bevorzugt Phenyl, sind,
- n: eine Zahl von 3 bis 50, bevorzugt 5 bis 30,
bedeutet.

Die arylhaltigen Polyorganosiloxane weisen Viskositäten zwischen 50 und 500 mPa·s auf, bevorzugt 100 bis 250 mPa•s.

Die polaren Additive (GG) können sowohl einzeln als auch in Kombination mit gleichartigen und/oder andersartigen polaren Additiven (GG) zum Einsatz kommen, wobei die Zusatzmengen, bezogen auf die gesamte Polyorganosiloxanzubereitung, zwischen 0 und 25 Gew.-%, bevorzugt zwischen 0,1 und 20 Gew.-%, besonders bevorzugt zwischen 0,1 und 10 Gew.-%, insbesondere bevorzugt zwischen 0,1 und 6 Gew.-% liegen.

Die gegebenenfalls in den erfindungsgemäßen fließfähigen, kondensations-vernetzenden Polyorganosiloxanzubereitungen enthaltenen weiteren Zusatzstoffe (HH) können zugesetzt werden, um den Systemen bestimmte Eigenschaften zu verleihen, jedoch mit der Maßgabe, dass sie den Erfindungszweck nicht beeinträchtigen.

Solche Zusatzstoffe (HH) können beispielsweise zur Steuerung der Reaktivität der erfindungsgemäßen kondensationsvernetzenden Polyorganosiloxanzubereitungen dienen, also als Beschleuniger oder Inhibitoren wirken. So beschleunigen Basen in kondensationsvernetzenden Systemen gewöhnlich die Vernetzungsreaktion, während Säuren verzögernd wirken. Die Reaktivität kann auch durch den Zusatz silanolhaltiger Verbindungen abgesenkt werden, bevorzugt durch α,ω-Dihydroxypolydiorganosiloxane der allgemeinen Formel HO(R³₂SiO)ₙH, wobei vorzugsweise n = 3 - 200, und R³ gleiche oder verschiedene einwertige, Si-C - gebundene, substituierte oder unsubstituierte C₁- bis C₁₈ - Kohlenwasserstoffreste sind, mit einer Viskosität bei 23°C von vorzugsweise 10 bis 1000 mPa.s, bevorzugt 20 bis 500 mPa.s, in einem Mengenanteil von 0,1 bis 10 Gew.-%, bevorzugt 0,2 bis 3 Gew.-%. Die Zusatzstoffe (HH) können des weiteren bestimmte Eigenschaften verbessern, wie beispielsweise die Hitzebeständigkeit oder die Schwerbrennbarkeit, durch Zusatz beispielsweise von Ceroxid, Zinkkarbonat, Mangankarbonat, Benzotriazol oder Platinverbindungen, oder im Falle von löslichen Farbstoffen oder unlöslichen Farbpigmenten der Farbgebung dienen.

Die hier genannten Beispiele für Zusatzstoffe (HH) sind nur Anschauungsbeispiele und sind nicht als Beschränkung der erfindungsgemäßen Polyorganosiloxanzubereitungen heranzuziehen.

Für die Kondensationsvernetzung von Polyorganosiloxanmassen ist eine bestimmte Menge an Wasser erforderlich. Die Menge an zugesetztem Wasser (JJ), liegt vorzugsweise bei 0 bis 2 Gew.-%, bezogen auf das Polyorganosiloxan (XX) mit kondensier- oder hydrolysierbaren Resten, besonders bevorzugt bei 0 bis 1 Gew.-%, wobei dann kein Wasserzusatz erforderlich ist, wenn eine ausreichende Wassermenge über andere Bestandteile der kondensationsvernetzenden Polyorganosiloxanmasse in das System eingetragen wird.

Die erfindungsgemäßen kondensationsvernetzenden Polyorganosiloxanzubereitungen können sowohl als Ein-, Zwei- oder Mehrkomponentensysteme formuliert werden.

Um Einkomponentensysteme zu erhalten, werden alle Rezepturbestandteile unter wasserfreien Bedingungen vermischt. Die so erhaltenen Massen vulkanisieren unter Einwirkung von Luftfeuchtigkeit oder durch Zusatz von Wasser, üblicherweise bei Raumtemperatur, gegebenenfalls auch bei erhöhten Temperaturen bis 100°C.

Um Zwei- oder Mehrkomponentensysteme zu erhalten, werden die Rezepturbestandteile so aufgeteilt, dass zwei oder mehr Komponenten entstehen, die miteinander vermischt werden, um die Vulkanisation vorzunehmen, wobei eine der Komponenten den Katalysator (DD) oder mehrere Katalysatoren (DD) enthält, gegebenenfalls auch den Vernetzer (CC) oder mehrere Vernetzer (CC). In einer bevorzugten Ausführung werden zwei Komponenten derart formuliert, dass eine der beiden Komponenten sowohl den Vernetzer (CC) oder mehrere Vernetzer (CC) als auch den Katalysator (DD) oder mehrere Katalysatoren (DD) enthält.

Eine weitere bevorzugte Ausführungsform der nach dem erfindungsgemäßen Verfahren hergestellten fließfähigen, vernetzbaren Polyorganosiloxanmassen sind additionsvernetzende Polyorganosiloxanmassen, dadurch gekennzeichnet, dass man zu ihrer Herstellung vermischt:
(AAA) die Suspension (A), hergestellt nach dem vorstehend beschriebenen Verfahren, wobei diese gegebenenfalls Polyorganosiloxan (X) enthalten kann, das gleiche oder verschiedene einwertige, SiC-gebundene, ungesättigte C₁ - C₈ - Alkylreste gemäß der allgemeinen Formel (IV), bevorzugt jedoch Vinylreste, aufweisen kann, oder gegebenenfalls Polyorganosiloxan (XX) enthalten kann, das gleiche oder verschiedene einwertige, SiC-gebundene, ungesättigte C₁ - C₈ - Alkylreste gemäß der allgemeinen Formel (IV), bevorzugt jedoch Vinylreste, oder Wasserstoffreste aufweisen kann,
(BBB) gegebenenfalls ein Polyorganosiloxan (XX) oder ein Gemisch aus mehreren Polyorganosiloxanen (XX), das gleiche oder verschiedene einwertige, SiC-gebundene, ungesättigte C₁ - C₈ - Alkylreste gemäß der allgemeinen Formel (IV), bevorzugt Vinylreste, aufweist, wobei der Rezepturbestandteil (BBB) dann obligatorisch ist, wenn (AAA) kein Polyorganosiloxan (X) enthält, das gleiche oder verschiedene einwertige, SiC-gebundene, ungesättigte C₁ - C₈ - Alkylreste gemäß der allgemeinen Formel (IV), bevorzugt Vinylreste, aufweist, oder kein Polyorganosiloxan (XX) enthält, das gleiche oder verschiedene einwertige, SiC-gebundene, ungesättigte C₁ - C₈ - Alkylreste gemäß der allgemeinen Formel (IV), bevorzugt jedoch Vinylreste, aufweist,
(CCC) **gegebenenfalls** einen oder mehrere Vernetzer, ausgewählt aus einem Organohydrogenpolysiloxan der allgemeinen Formel

   R'_{b}H_{c}SiO_{(4-b-c)/4} (VII),

   worin
   - R': jeweils für sich unabhängig voneinander Reste R² gemäß der allgemeinen Formel (IV)
   - b: einen Wert von 0,6 bis 2,3 und
   - c: einen Wert von 0,005 bis 1,3
   bedeuten, mit der Maßgabe, dass die Summe (b+c) einen Wert von 0,8 bis 2,7 und das Organohydrogenpolysiloxan der allgemeinen Formel (VII) in jedem Molekül mindestens zwei Si-gebundene Wasserstoffreste aufweist, wobei der Rezepturbestandteil (CCC) dann obligatorisch ist, wenn es sich bei dem in Rezepturbestandteil (AAA) enthaltenen Polyorganosiloxan (XX) um kein Organohydrogenpolysiloxan handelt, sowie das molare Verhältnis der Si-H-Gruppen im Vernetzer (CCC) und gegebenenfalls im Polyorganosiloxan (XX) als Bestandteil der Suspension (A) zu den Alkenylgruppen in den Rezepturbestandteilen (AAA) und gegebenenfalls (BBB) 0,3 bis 10, bevorzugt 0,5 bis 5, beträgt,
(DDD) einen im Additionssystem wirksamen Vernetzungskatalysator,
(EEE) **gegebenenfalls** ein Polyorganosiloxan oder ein Gemisch aus mehreren Polyorganosiloxanen (XX), das keine kondensierbaren oder hydrolysierbaren Gruppen gemäß der allgemeinen Formel (IV) aufweist, bevorzugt α,ω-Bis(trialkylsiloxy)polyorganosiloxane, besonders bevorzugt α,ω-Bis(trimethylsiloxy)polydimethylsiloxane,
(FFF) **gegebenenfalls** einen oder mehrere nicht verstärkende oder teilverstärkende Füllstoffe, wie oben unter (FF) beschrieben,
(GGG) **gegebenenfalls** ein oder mehrere polare Additive, wie oben unter (GG) grundsätzlich beschrieben und
(HHH) **gegebenenfalls** weitere Zusatzstoffe.

Bei den Vernetzern (CCC) kann es sich um lineare, verzweigte oder zyklische Organohydrogenpolysiloxane handeln, beschrieben durch die allgemeinen Formeln (VIII), (IX) und (X)

H_{y}(R'')_{3-y}SiO[Si(R'')₂O]ₘ [SiH(R'')O]ₙSi(R'')_{3-y}H_{y} (VIII)

[Si(R'')₂O]ₚ [SiH(R'')O]_{q} (IX)

[(R'')₃₋ᵣHᵣSiO]_{z}SiHₛ(R'')_{4-s-z} (X)

worin
- R'': gleiche oder verschiedene einwertige, SiC-gebundene, gegebenenfalls substituierte, gesättigte oder ungesättigte C₁-C₈ - Alkylreste, bevorzugt Methyl und Vinyl, gegebenenfalls substituierte C₁-C₈ - Arylreste, bevorzugt Phenyl,
- m: 0 oder eine Zahl von 1 bis 300, bevorzugt 0 bis 200, besonders bevorzugt 0 bis 150,
- n: 0 oder eine Zahl von 1 bis 100, bevorzugt 0 bis 60,
- p: 0 oder eine Zahl von 1 bis 6, bevorzugt 0 bis 4,
- q: eine Zahl von 2 bis 8,
- r: eine Zahl von 1 bis 2,
- s: 0 oder 1,
- y: 0 oder eine Zahl von 1 bis 2, bevorzugt 0 bis 1 und
- z: eine Zahl von 2 bis 4, bevorzugt 3 bis 4,
bedeuten.

Konkrete bevorzugte Beispiele für die Vernetzer (CCC) sind α,ω-Bis(dimethylhydridosiloxy)polydimethylsiloxane; Polymethyl-*H*-siloxane oder Dimethylsiloxan-Methyl-*H*-siloxan-Copolymere mit Dimethylhydridosiloxy- oder Trimethylsiloxy-gruppen an den Kettenenden; zyklische Polymethyl-*H*-siloxane oder zyklische Dimethylsiloxan-Methyl-*H*-siloxan-Copolymere, Tetrakis(dimethylhydridosiloxy)silan, Tris(dimethylhydridosiloxy)methylsilan und Tris-(dimethylhydridosiloxy)silan.

Die Vernetzer (CCC) weisen vorzugsweise eine Viskosität bis 2000 mPa·s bei 23°C auf.

Bei den für die nach dem erfindungsgemäßen Verfahren hergestellten fließfähigen, additionsvernetzenden Polyorganosiloxanmassen geeigneten Katalysatoren (DDD) handelt es sich um vorzugsweise Metalle der Nebengruppe VIII des Periodensystems wie Platin, Rhodium oder Palladium sowie deren Verbindungen, bevorzugt Platin und dessen Verbindungen. Konkrete Beispiele für die Katalysatoren (DDD) sind Platinmohr, Hexachlorplatinsäure und Platin-Komplexe mit Olefinen, Aldehyden, Vinylsiloxanen oder Acetylencarbinolen.

Die Katalysatoren (DDD) können einzeln oder in Abmischung zum Einsatz kommen, und zwar in einem Mengenanteil, bezogen auf die Gesamtmenge an Polyorganosiloxan (X) und/oder Polyorganosiloxan (XX) mit Alkenylgruppen, von 0,1 bis 2000 ppm, bevorzugt 1 bis 500 ppm, besonders bevorzugt 5 bis 100 ppm.

Bei den gegebenenfalls einen oder mehreren polaren Additiven (GGG), wie oben unter (GG) bereits grundsätzlich beschrieben, werden als Antistatika und Hydrophilmodifier für die nach dem erfindungsgemäßen Verfahren hergestellten fließfähigen, additionsvernetzenden Polyorganosiloxanmassen bevorzugt nichtionische Tenside, besonders bevorzugt
a) Ethylenoxid(EO)/Propylenoxid(PO)-Blockcopolymere der allgemeinen Formel (XI)

   HO(C₂H₄O)ₓ(C₃H₆O)_{y}H (XI),

   worin
   x 0,05 - 0,6 y, bevorzugt 0,2 - 0,4 y,
   x+y 40 - 60, bevorzugt 45 - 55,
   bedeutet,
b) Copolymere aus (A) Diorganosiloxy- sowie (B) EO- und/oder PO-Blöcken in der Kette vom Typ BAB der allgemeinen Formel (XII)

   X(CₙH₂ₙO)ₓ(CH₂)_{y} -R²₂SiO-(R²₂SiO)ₘ-R²₂SiO-(CH₂)_{y}(OCₙH₂ₙ)ₓ X (XII),

   worin
   - R²: dieselbe Bedeutung wie in Formel (II) hat, bevorzugt jedoch Methyl,
   - X: Hydroxy oder Alkoxy, bevorzugt Hydroxy, Methoxy, Ethoxy, Propoxy,
   - n: 2 oder 3,
   - m: eine Zahl zwischen 1 und 50, bevorzugt zwischen 10 und 20,
   - x: eine Zahl zwischen 1 und 20, bevorzugt zwischen 5 und 15, und
   - y: 1, 2 oder 3, bevorzugt 3,
   bedeutet,
c) Polyorganosiloxane mit Alkylenoxid-Blöcken oder Polyolen in der Seitenkette oder am Kettenende der Formel (XIII)

   R⁵₃SiO(R⁵₂SiO)ₓ(R⁵YSiO)_{y}OSiR⁵₃ (XIII),

   worin
   - R⁵: gleiche oder verschiedene einwertige, SiC-gebundene, gesättigte oder ungesättigte C₁-C₈ - Alkylreste, bevorzugt Methyl und Vinyl, oder Wasserstoff,
   - x: 0 oder eine Zahl zwischen 1 und 250, bevorzugt zwischen 10 und 200,
   - y: eine Zahl zwischen 1 und 50, bevorzugt zwischen 10 und 40, und
   - Y: -CₙH₂ₙ(OCH₂CH₂)ₚ(OCH₂CH₂CH₂)_{q}Q, worin
   Q OH oder einen C₁-C₆ - Alkoxyrest, bevorzugt OH, Methoxy, Ethoxy, Propoxy,
   n 0 - 6, bevorzugt 2 und 3, besonders bevorzugt 3,
   p eine Zahl ≥ 1, bevorzugt 2 - 8, besonders bevorzugt 3 - 6, und
   q eine Zahl ≥ 0, bevorzugt 0 - 1, besonders bevorzugt 0,
   bedeutet.

Die nichtionischen Tenside weisen Viskositäten von 50 bis 2000 mPa•s, bevorzugt 100 bis 1000 mPa•s, auf.

Beispiele für die polaren Additive (GGG), wie oben unter (GG) bereits grundsätzlich beschrieben, die sich als Haftvermittler für die nach dem erfindungsgemäßen Verfahren hergestellten fließfähigen, additionsvernetzenden Polyorganosiloxanmassen eignen, sind funktionelle Silane wie Vinyltrimethoxysilan, Vinyltriethoxysilan, Vinyltris(2-methoxyethoxy)silan, Allyltrimethoxysilan, 2-(3,4-Epoxycyclohexyl)ethyltrimethoxysilan, 2-(3,4-Epoxy-cyclohexyl)ethyltriethoxysilan, 3-(2,3-Epoxypropoxy)propyltrimethoxysilan, 3-(2,3-Epoxypropoxy)propyltriethoxysilan, 3-Methacryloxypropyltrimethoxysilan, 3-Methacryloxypropyltriethoxysilan, bevorzugt 3-(2,3-Epoxypropoxy)propyltrimethoxysilan und 3-Methacryloxypropyltrimethoxysilan.

Beispiele für als Trenn-, Gleit- oder Hydrophobiermittel geeignete Additive (GGG) mit einem Ausschwitzeffekt aus dem vulkanisierten Siliconkautschuk sind arylhaltige Polyorganosiloxane der allgemeinen Formel (VI)

R³(R⁴₂SiO)ₙSiR⁴₂R³ (VI)

worin
- R³: gleiche oder verschiedene einwertige, SiC-gebundene, gegebenenfalls substituierte C₁ - C₈ - Alkylreste, bevorzugt Methyl und Vinyl, gegebenenfalls substituierte C₁ - C₈ - Arylreste, bevorzugt Phenyl,
- R⁴: gleiche oder verschiedene einwertige, SiC-gebundene, gegebenenfalls substituierte C₁ - C₈ - Alkylreste, bevorzugt Methyl und Vinyl, gegebenenfalls substituierte C₁ - C₈ - Arylreste, bevorzugt Phenyl, wobei 10 bis 45 Mol-% der R⁴-Reste Arylreste, bevorzugt Phenyl, sind, und
- n: eine Zahl von 3 bis 50, bevorzugt 5 bis 30,
bedeutet.

Die arylhaltigen Polyorganosiloxane weisen Viskositäten zwischen 50 und 500 mPa•s auf, bevorzugt 100 bis 250 mPa•s.

Die polaren Additive (GGG) können sowohl einzeln als auch in Kombination mit gleichartigen und/oder andersartigen polaren Additiven (GGG) zum Einsatz kommen, wobei die Zusatzmengen, bezogen auf die gesamte Polyorganosiloxanzubereitung, zwischen 0 und 10 Gew.-%, bevorzugt zwischen 0 und 5 Gew.-%, liegen.

Die gegebenenfalls in den erfindungsgemäßen fließfähigen, additionsvernetzenden Polyorganosiloxanzubereitungen enthaltenen weiteren Zusatzstoffe (HHH) können zugesetzt werden, um den Systemen bestimmte Eigenschaften zu verleihen, jedoch mit der Maßgabe, dass sie den Erfindungszweck nicht beeinträchtigen.

Solche Zusatzstoffe (HHH) können beispielsweise zur Steuerung der Reaktivität der erfindungsgemäßen additionsvernetzenden Polyorganosiloxanzubereitungen geeignete Inhibitoren für den Katalysator (DDD) sein. Bevorzugte Beispiele für solche Inhibitoren sind ungesättigte Gruppen aufweisende Siloxane wie 1,3-Divinyl-1,1,3,3-tetramethyldisiloxan, 1,3,5,7-Tetravinyl-1,3,5,7-tetramethylcyclotetrasiloxan, 1,3,5,7-Tetracyclohexenyl-1,3,5,7-tetramethylcyclotetrasiloxan, Polyvinylmethylsiloxane oder Dimethylsiloxan-Vinylmethylsiloxan-Copolymere, sowie Acetylenalkohole wie 1-Ethinyl-1-cyclohexanol und 2-Methyl-3-butyn-2-ol, 3-Methyl-1-butyn-3-ol, 3,5-Dimethyl-1-hexyn-3-ol, 3-Phenyl-1-butyn-3-ol; Triazolverbindungen wie beispielsweise Benzotriazol.

Die Zusatzmenge solcher Inhibitoren hängt von den Lager-, Verarbeitungs- und Vulkanisationsbedingungen ab und kann zwischen 1 ppm und 50.000 ppm, bevorzugt zwischen 10 ppm und 10.000 ppm, bezogen auf die Gesamtmenge an Polyorganosiloxan (X) und/oder Polyorganosiloxan(XX) mit Alkenylgruppen betragen. Die Zusatzstoffe (HHH) können des weiteren bestimmte Eigenschaften verbessern, wie beispielsweise die Hitzebeständigkeit oder die Schwerbrennbarkeit, durch Zusatz von beispielsweise Ceroxid, Antimonoxid, Zinkkarbonat, Mangankarbonat, Benzotriazol oder Platinverbindungen, oder im Falle von löslichen Farbstoffen oder unlöslichen Farbpigmenten der Farbgebung dienen.

Die hier genannten Beispiele für Zusatzstoffe (HHH) sind nur Anschauungsbeispiele und sind nicht als Beschränkung der erfindungsgemäßen Polyorganosiloxanzubereitungen heranzuziehen.

Die erfindungsgemäßen fließfähigen, additionsvernetzenden Polyorganosiloxanzubereitungen können sowohl als Ein-, Zwei- oder Mehrkomponentensysteme formuliert werden.
Um Einkomponentensysteme zu erhalten, werden alle Rezepturbestandteile vermischt. Durch Zusatz eines ausreichend effizienten Inhibitors für den Katalysator (DDD), bevorzugt Acetylenalkohole wie 1-Ethinyl-1-cyclohexanol und 2-Methyl-3-butyn-2-ol, werden Lagerfähigkeitszeiten bis zu einem Jahr möglich. Die Vulkani-sation erfolgt dann bei erhöhten Temperaturen zwischen 150°C und 200°C.

Um Zwei- oder Mehrkomponentensysteme zu erhalten, werden die Rezepturbestandteile so aufgeteilt, dass zwei oder mehr Komponenten entstehen, die miteinander vermischt werden, um die Vulkanisation vorzunehmen, wobei eine der Komponenten den Katalysator (DDD) oder mehrere Katalysatoren (DDD), eine andere den Vernetzer (CCC) oder mehrere Vernetzer (CCC) enthält.

Die fließfähigen, kondensations- bzw. additionsvernetzenden Organopolysiloxanzubereitungen, basierend auf den erfindungsgemäßen Suspensionen aus Polyorganosiloxanen und verstärkenden Füllstoffen, eignen sich grundsätzlich für alle Anwendungen, in denen vorteilhafterweise fließfähige, bei Raumtemperatur oder höheren Temperaturen vulkanisierbare Siliconkautschukmassen mit erhöhter Vulkanisatfestigkeit, gegebenenfalls unter Zusatz bestimmter Additive, zum Einsatz kommen, wie beispielsweise für den Verguss elektrischer oder elektronischer Bauteile, für Dichtungen und Abdichtungen, für die Herstellung von Formteilen, darunter auch Drucktampons, sowie für die Abformung von Originalen, darunter auch Dentalabformungen.

### Beispiele

Die folgenden Beispiele dienen zur Beschreibung des erfindungsgemäßen Verfahrens zur Herstellung von Suspensionen von verstärkenden Füllstoffen in Polyorganosiloxanen, des Einsatzes dieser Suspensionen zur Herstellung von fließfähigen kondensations- und additionsvernetzenden Polyorganosiloxanzubereitungen, sowie der Viskositätstoleranz dieser Zubereitungen gegenüber dem Zusatz polarer Additive.

Diese Beispiele sollen keinesfalls den gesamten Anwendungsbereich der erfindungsgemäßen Zubereitungen begrenzen oder einschränken.

Alle Teile sind Gewichtsteile.

Die In-situ-Füllstoffbehandlung und Herstellung der Polyorganosiloxan-/Füllstoff-Dispersionen wurde in einem 15 l - Mischkneter mit heiz- und kühlbarem Trog und zwei gegenläufigen Knetschaufeln bei Normaldruck unter Inertgasspülung (N₂; ca. 200 l/h) unter Verwendung einer Kühlfalle für die Entfernung flüchtiger Substanzen im Inertgasstrom vorgenommen. Die Mischungsbestandteile wurden so gewählt, dass sich nach vollständiger Zugabe des verstärkenden Füllstoffs eine möglichst steife, jedoch noch völlig homogene Phase zur Erzielung der höchst-möglichen Scherung des Polyorganosiloxan-/ Füllstoff-Gemisches ergab. Die fertigen Polyorganosiloxan-/ Füllstoff-Dispersionen wurden über einen Zweiwalzenstuhl abgerieben und zusätzlich durch ein 100 µm - Sieb gestrainert.
Die Herstellung der anwendungsfertigen Polyorganosiloxanzubereitungen erfolgte in einem 5 1 - Planetendissolver mit heiz- und kühlbarem Kessel sowie Evakuiermöglichkeit.

Die Messung der Viskosität der Polymer-/Füllstoff-Dispersionen erfolgte mittels eines dynamischen Platte-Kegel-Viskosimeters der Type MCR 300 von Fa. Physica nach Norm DIN EN ISO 3219 unter folgenden Bedingungen:
- Temperatur:: 25°C
- Messmethode:: Rotationsmessung
- Platte/Kegel-Geometrie:: Durchmesser 25 mm; Kegelwinkel 2°
- Messart:: schergeschwindigkeitsgesteuert
- Schergeschwindigkeits-bereich:: 0,1 - 1 s⁻¹
- Messzeit:: 2 min
- Zahl der Messwerte:: 30(logarithmische Werteverteilung: 10 s für den 1. und 1 s für den letzten Wert)
- Auswertung:: Viskositätsangabe in mPa•s als Interpolationswert bei einer Schergeschwindigkeit D von 0,89 s⁻¹.

Die Messung der Viskosität der anwendungsfertigen Polyorganosiloxanzubereitungen sowie deren Verarbeitungszeit erfolgte mittels eines Digital-Viskosimeters der Type RVTDV-I von Fa. Brookfield, mit angepasster Spindel und 2,5 Umdrehungen/min bei 23°C/50% relativer Luftfeuchtigkeit nach Norm EN ISO 2555.

Als Verarbeitungszeit wurde die Zeitspanne zwischen dem Vermischen der beiden Komponenten A und B und jenem Zeitpunkt definiert, an dem die katalysierte Mischung eine Viskosität von 60000 mPa•s erreichte.

Die Messung der mechanischen Eigenschaften erfolgte bei den kondensationsvernetzenden Systemen an gegossenen und nach der Entformung 4 Tage im Normklima (23°C/50% relative Luftfeuchtigkeit) gelagerten Vulkanisat-Folien mit 2 mm Schichtdicke, und bei den additionsvernetzenden Systemen an 10 Minuten bei 100°C in einer beheizbaren hydraulischen Presse bei 200 bar Pressdruck hergestellten und nach der Entformung 1 Stunde im Normklima (23°C/50% relative Luftfeuchtigkeit) gelagerten Vulkanisat-Folien mit 2 mm Schichtdicke. Die Messungen wurden bei
- der Härte Shore A nach Norm DIN EN ISO 868 (DIN 53505)
- der Reißfestigkeit in N/mm² und Reißdehnung in % nach Norm DIN 53504 S 3A
- dem Weiterreißwiderstand in N/mm nach Norm DIN 53507 (ISO 34-1) - Streifenprobe (Trouser Test Piece)
vorgenommen.

### Beispiel 1

3500 g eines α,ω-Bis(vinyldimethylsiloxy)polydimethylsiloxans mit einer Viskosität von 1000 mPa·s und einem Rest-SiOH-Gehalt von 200 ppm wurden im Kneter unter Inertgasspülung mit 30 g einer 50%igen wässrigen KOH vermischt. Ohne Heizung oder Kühlung wurden portionsweise innerhalb von 60 Minuten insgesamt 2450 g einer unbehandelten Flammkieselsäure mit einer BET-Oberfläche von 140 m²/g eingearbeitet. Nach Beendigung der Füllstoffzugabe wurde die Mischung unter Heizen drei Stunden geknetet, wobei die Masse eine Temperatur von 150°C erreichte. Nach einer Abkühlphase von 20 Minuten (Mischungstemperatur: 100°C) wurden 10 g Methansulfonsäure (98%ig) und danach 40 g einer Mischung aus 20 g Vinyldimethylchlorsilan und 20 g eines α,ω-Bis(trimethylsiloxy)polydimethylsiloxans mit einer Viskosität von 100 mPa•s in vier gleichen Portionen eingemischt. Nach einstündigem Kneten ohne Kühlung wurde die Mischung zwei Stunden bei 150°C im Inertgasstrom ausgeheizt, danach auf 90°C abgekühlt. Abschließend wurden zuerst 300 g eines α,ω-Dihydroxypolydimethylsiloxans mit einer Viskosität von 12000 mPa•s und einem OH-Gehalt von 900 ppm und danach 850 g eines α,ω-Dihydroxypolydimethylsiloxans mit einer Viskosität von 6000 mPa•s und einem OH-Gehalt von 1100 ppm eingemischt. Die Polymer-/Füllstoff-Dispersion (1) wies eine Viskosität von 180000 mPa•s auf. Basierend auf der Polymer-/Füllstoff-Dispersion (1) wurde eine kondensationsvernetzende Polyorganosiloxan-Zubereitung (1 A) hergestellt durch Vermischen von:
- 2,20 kg: Polymer-/Füllstoff-Dispersion (1),
- 0,80 kg: Quarzmehl mit einer mittleren Korngröße von 3 µm,
- 0,15 kg: α,ω-Dihydroxypolydimethylsiloxan mit einer Viskosität von 500 mPa•s und einem OH-Gehalt von 2800 ppm,
- 0,35 kg: α,ω-Dihydroxypolydimethylsiloxan mit einer Viskosität von 12000 mPa•s und einem OH-Gehalt von 900 ppm,
- 0,50 kg: α,ω-Dihydroxypolydimethylsiloxan mit einer Viskosität von 20000 mPa•s und einem OH-Gehalt von 750 ppm und
- 0,40 kg: α,ω-Bis(trimethylsiloxy)polydimethylsiloxan mit einer Viskosität von 100 mPa•s und einem Rest-OH-Gehalt von 600 ppm.

Die Polyorganosiloxan-Zubereitung (1 A) wies eine Viskosität von 30000 mPa•s auf.

100 Teile der Polyorganosiloxan-Zubereitung (1 A) wurden mit 5 Teilen einer Härterzubereitung (1 B) bestehend aus
- 2 Teilen: Tetra-n-propoxysilan,
- 1 Teil: Di-n-butylzinndineodekanoat und
- 2 Teilen: α,ω-Bis(trimethylsiloxy)polydimethylsiloxan mit einer Viskosität von 100 mPa•s,
vermischt.

Die katalysierte Mischung wies eine Viskosität von 25000 mPa•s sowie eine Verarbeitungszeit von 40 min auf. Die mechanischen Eigenschaften sind in Tabelle 1 angegeben.

### Beispiel 2 (Vergleichsbeispiel)

2450 g eines α,ω-Bis(vinyldimethylsiloxy)polydimethylsiloxans mit einer Viskosität von 1000 mPa•s und einem Rest-SiOH-Gehalt von 200 ppm wurden im Kneter unter Inertgasspülung sowie ohne Heizung oder Kühlung portionsweise innerhalb von 45 Minuten mit insgesamt 2450 g einer mit Hexamethyldisilazan vorbehandelten Flammkieselsäure mit einer BET-Oberfläche von 140 m²/g vermischt. Nach Beendigung der Füllstoffzugabe wurde die Mischung ohne Heizen und Kühlen eine Stunde geknetet, wobei die Masse eine Temperatur von 140°C erreichte. Danach wurde die Mischung zwei Stunden bei 150°C im Inertgasstrom ausgeheizt und anschließend auf 90°C abgekühlt. Abschließend wurden zuerst 300 g eines α,ω-Dihydroxypolydimethylsiloxans mit einer Viskosität von 12000 mPa·s und einem OH-Gehalt von 900 ppm und danach 850 g eines α,ω-Dihydroxypolydimethylsiloxans mit einer Viskosität von 6000 mPa·s und einem OH-Gehalt von 1100 ppm sowie weitere 1050 g des α,ω-Bis(vinyldimethylsiloxy)-polydimethylsiloxans mit einer Viskosität von 1000 mPa·s und einem Rest-SiOH-Gehalt von 200 ppm eingemischt. Die Polymer-/Füllstoff-Dispersion (2) wies eine Viskosität von 600000 mPa•s auf.

Basierend auf der Polymer-/Füllstoff-Dispersion (2) wurde eine kondensationsvernetzende Polyorganosiloxan-Zubereitung (2 A) mit identischer Zusammensetzung wie Zubereitung (1 A) hergestellt, die eine Viskosität von 35000 mPa•s aufwies.

100 Teile der Polyorganosiloxan-Zubereitung (2 A) wurden mit 5 Teilen Härterzubereitung (2 B) vermischt, welche identisch war mit Härterzubereitung (1 B).

Die katalysierte Mischung wies eine Viskosität von 22000 mPa•s sowie eine Verarbeitungszeit von 100 min auf. Die mechanischen Eigenschaften sind in Tabelle 1 angegeben.

### Beispiel 3 (Vergleichsbeispiel)

3500 g eines α,ω-Bis(vinyldimethylsiloxy)polydimethylsiloxans mit einer Viskosität von 1000 mPa·s und einem Rest-SiOH-Gehalt von 200 ppm wurden im Kneter unter Inertgasspülung mit 45 g Wasser und 370 g Hexamethyldisilazan vermischt. Ohne Heizung oder Kühlung wurden portionsweise innerhalb von 30 Minuten insgesamt 2450 g einer unbehandelten Flammkieselsäure mit einer BET-Oberfläche von 140 m²/g eingearbeitet. Nach Beendigung der Füllstoffzugabe wurde die Mischung ohne Heizen oder Kühlen eine Stunde geknetet, wobei die Masse eine Temperatur von 100°C erreichte. Anschließend wurde die Mischung zwei Stunden bei 150°C im Inertgasstrom ausgeheizt, danach auf 90°C abgekühlt. Abschließend wurden zuerst 300 g eines α,ω-Dihydroxypolydimethylsiloxans mit einer Viskosität von 12000 mPa•s und einem OH-Gehalt von 900 ppm und danach 850 g eines α,ω-Dihydroxypolydimethylsiloxans mit einer Viskosität von 6000 mPa•s und einem OH-Gehalt von 1100 ppm eingemischt. Die Polymer-/Füllstoff-Dispersion (3) wies eine Viskosität von 6500000 mPa•s auf.

Basierend auf der Polymer-/Füllstoff-Dispersion (3) wurde eine kondensationsvernetzende Polyorganosiloxan-Zubereitung (3 A) mit identischer Zusammensetzung wie Zubereitung (1 A) hergestellt, die eine Viskosität von 50000 mPa•s aufwies.

100 Teile der Polyorganosiloxan-Zubereitung (3 A) wurden mit 5 Teilen Härterzubereitung (3 B) vermischt, welche identisch war mit Härterzubereitung (1 B).

Die katalysierte Mischung wies eine Viskosität von 45000 mPa•s sowie eine Verarbeitungszeit von 12 min auf. Die mechanischen Eigenschaften sind in Tabelle 1 angegeben.

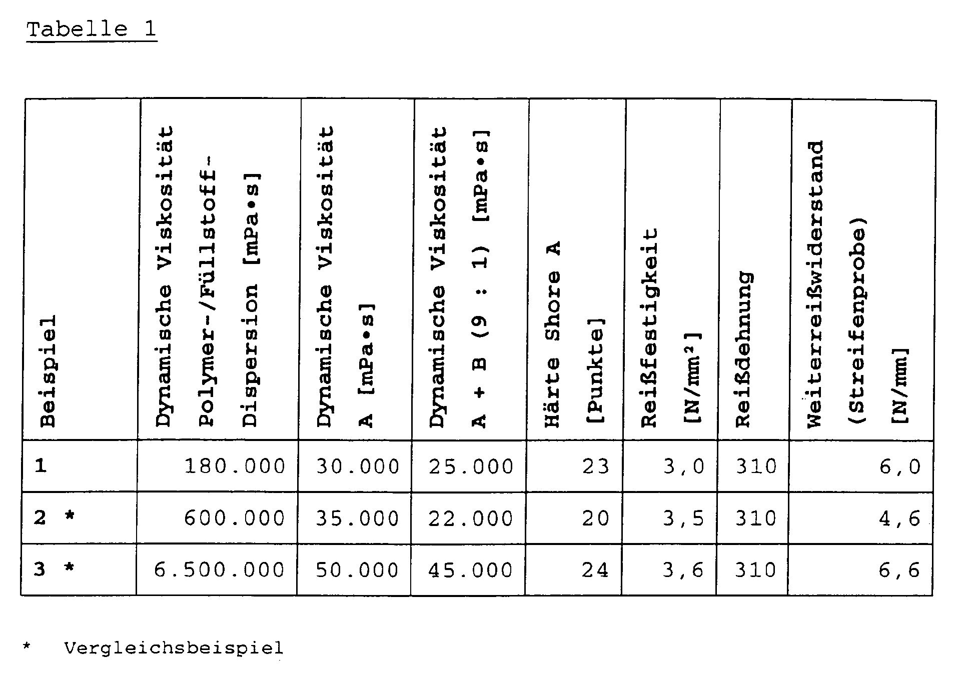

Die Polyorganosiloxan-Zubereitungen 1 A, 2 A und 3 A wurden jeweils mit einem polaren Additiv in Wirkkonzentration versetzt. Zehn Minuten nach Additivzugabe wurde die Viskosität gemessen (Tabelle 1a):

**Tabelle 1a**

| | **Viskosität [mPa•s]** | | |
|---|---|---|---|
| | **Beispiel** | **Vergleichsbeispiel** | |
| | **1 A** | **2 A** | **3 A** |
| Ohne Additivzusatz | 30.000 | 35.000 | 50.000 |
| 1.2% Additiv 1* (Antistatikum) | 28.000 | 1) | 1) |
| 1% Additiv 2** (Haftvermittler) | 40.000 | 1) | 1) |

| | | | |
|---|---|---|---|
| * Natriumsalz des Phosphorsäureesters von Laurylethoxylat mit 2 EO-Gruppen und Polyethylenglykol ** N-(2-Aminoethyl)-3-aminopropyltriethoxysilan 1) standfest/nicht messbar | | | |

### Beispiel 4

1750 g eines α,ω-Bis(vinyldimethylsiloxy)polydimethylsiloxans mit einer Viskosität von 1000 mPa•s und einem Rest-SiOH-Gehalt von 10 ppm wurden im Kneter unter Inertgasspülung mit 30 g einer 50%igen wässrigen KOH vermischt. Die Mischung wurde eine Stunde bei 150°C geknetet und anschließend unter Kneten auf 100°C abgekühlt. Nun wurden 1750 g eines α,ω-Bis(vinyldimethylsiloxy)polydimethylsiloxans mit einer Viskosität von 1000 mPa•s und einem Rest-SiOH-Gehalt von 200 ppm eingemischt. Daraufhin wurden ohne Heizung oder Kühlung portionsweise innerhalb von 60 Minuten insgesamt 2450 g einer unbehandelten Flammkieselsäure mit einer BET-Oberfläche von 140 m²/g eingearbeitet. Nach Beendigung der Füllstoffzugabe wurde die Mischung unter Heizen drei Stunden geknetet, wobei die Masse eine Temperatur von 150°C erreichte. Nach einer Abkühlphase bis zum Erreichen einer Mischungstemperatur von 120°C wurden 10 g Methansulfonsäure und danach 56 g einer Mischung aus 28 g Vinyldimethylchlorsilan und 28 g eines α,ω-Bis(trimethylsiloxy)polydimethylsiloxans mit einer Viskosität von 100 mPa•s in vier gleichen Portionen eingemischt. Nach einstündigem Kneten ohne Kühlung wurde die Mischung zwei Stunden bei 150°C im Inertgasstrom ausgeheizt, danach auf 120°C abgekühlt. Abschließend wurden 2600 g eines α,ω-Dihydropolydimethyl-siloxans mit einer Viskosität von 1000 mPa•s und einem H-Gehalt von 120 ppm eingemischt. Die Polymer-/Füllstoff-Dispersion (4) wies eine Viskosität von 52.000 mPa•s auf.

Basierend auf der Polymer-/Füllstoff-Dispersion (4) wurde eine additionsvernetzende Polyorganosiloxan-Zubereitung (4 A) hergestellt, durch Vermischen von
- 3,60 kg: Polymer-/Füllstoff-Dispersion (4),
- 0,08 kg: Quarzmehl mit einer mittleren Korngröße von 3 µm,
- 0,09 kg: α,ω-Bis(vinyldimethyl)polydimethylsiloxan mit einer Viskosität von 1000 mPa•s und einem Vinyl-Gehalt von 3200 ppm,
- 0,03 kg: α,ω-Bis(vinyldimethyl)polydimethylsiloxan mit einer Viskosität von 20000 mPa•s und einem Vinyl-Gehalt von 1200 ppm,
- 0,64 kg: α,ω-Dihydropolydimethylsiloxan mit einer Viskosität von 1000 mPa•s und einem H-Gehalt von 120 ppm und
- 0,06 kg: α,ω-Bis(trimethylsiloxy)polydimethyl(methyl-*H*-)-siloxan mit einer Viskosität von 180 mPa•s und einem H-Gehalt von 1800 ppm.

Die Polyorganosiloxan-Zubereitung (4 A) wies eine Viskosität von 23000 mPa•s auf.

Zusätzlich wurde eine additionsvernetzende Polyorganosiloxan-Zubereitung (4 B) hergestellt, durch Vermischen von
- 0,225 kg: α,ω-Bis(vinyldimethyl)polydimethylsiloxan mit einer Viskosität von 200 mPa•s und einem Vinyl-Gehalt von 7400 ppm,
- 0,175 kg: α,ω-Bis(vinyldimethyl)polydimethylsiloxan mit einer Viskosität von 1000 mPa•s und einem Vinyl-Gehalt von 3200 ppm,
- 0,067 kg: α,ω-Bis(vinyldimethyl)polydimethylsiloxan mit einer Viskosität von 20000 mPa•s und einem Vinyl-Gehalt von 1200 ppm,
- 0,020 kg: mit Hexamethyldisilazan vorbehandelte Flammkieselsäure mit einer BET-Oberfläche von 140 m²/g,
- 0,006 kg: Platin-1,3-Divinyl-1,1,3,3-tetramethyldisiloxan-Komplex (gemäß US 3,775,452, Spalte 2, Zeile 14 - Spalte 4, Zeile 39) in α,ω-Bis(vinyldimethyl)polydimethylsiloxan einer Viskosität von 1000 mPa•s (Platin-Gehalt: 10000 ppm) und
- 0,007 kg: 1,3-Divinyl-1,1,3,3-tetramethyldisiloxan.

Die Polyorganosiloxan-Zubereitung (4 B) wies eine Viskosität von 900 mPa•s auf.

450 Teile der Polyorganosiloxan-Zubereitung (4 A) wurden mit 50 Teilen der Polyorganosiloxan-Zubereitung (4 B) vermischt. Die katalysierte Mischung wies eine Viskosität von 15.000 mPa•s und eine Verarbeitungszeit von 30 min auf. Die mechanischen Eigenschaften sind in Tabelle 2 angegeben.

### Beispiel 5

1750 g eines α,ω-Bis(vinyldimethylsiloxy)polydimethylsiloxans mit einer Viskosität von 1000 mPa•s und einem Rest-SiOH-Gehalt von 10 ppm wurden im Kneter unter Inertgasspülung mit 60 g einer 65%igen wässrigen KOH vermischt. Die Mischung wurde eine Stunde bei 150°C geknetet und anschließend unter Kneten auf 100°C abgekühlt. Nun wurden 1750 g eines α,ω-Bis-(vinyldimethylsiloxy)polydimethyl-siloxans mit einer Viskosität von 1000 mPa•s und einem Rest-SiOH-Gehalt von 200 ppm eingemischt. Daraufhin wurden ohne Heizung oder Kühlung portionsweise innerhalb von 60 Minuten insgesamt 2450 g einer unbehandelten Flammkieselsäure mit einer BET-Oberfläche von 140 m²/g eingearbeitet. Nach Beendigung der Füllstoffzugabe wurde die Mischung unter Heizen drei Stunden geknetet, wobei die Masse eine Temperatur von 150°C erreichte. Nach einer Abkühlphase bis zum Erreichen einer Mischungstemperatur von 120°C wurden 50 g Ameisensäure in zwei gleichen Portionen eingemischt. Nach einstündigem Kneten ohne Kühlung wurde die Mischung zwei Stunden bei 150°C im Inertgasstrom ausgeheizt, danach auf 120°C abgekühlt. Abschließend wurden 2600 g eines α,ω-Dihydropolydimethyl-siloxans mit einer Viskosität von 1000 mPa•s und einem H-Gehalt von 120 ppm eingemischt. Die Polymer-/Füllstoff-Dispersion (5) wies eine Viskosität von 41.000 mPa•s auf.

Basierend auf der Polymer-/Füllstoff-Dispersion (5) wurde eine additionsvernetzende Polyorganosiloxan-Zubereitung (5 A) mit identischer Zusammensetzung wie Zubereitung (4 A) hergestellt, die eine Viskosität von 19.500 mPa•s aufwies.

450 Teile der Polyorganosiloxan-Zubereitung (5 A) wurden mit 50 Teilen der Polyorganosiloxan-Zubereitung (5 B) vermischt, welche identisch war mit der Polyorganosiloxan-Zubereitung (4 B).

Die katalysierte Mischung wies eine Viskosität von 14000 mPa•s und eine Verarbeitungszeit von 35 min auf. Die mechanischen Eigenschaften sind in Tabelle 2 angegeben.

### Beispiel 6 (Vergleichsbeispiel)

Eine Abmischung aus 1750 g eines α,ω-Bis(vinyldimethylsiloxy)-polydimethylsiloxans mit einer Viskosität von 1000 mPa•s und einem Rest-SiOH-Gehalt von 10 ppm und 1750 g eines α,ω-Bis(vinyldimethylsiloxy)polydimethylsiloxans mit einer Viskosität von 1000 mPa•s und einem Rest-SiOH-Gehalt von 200 ppm wurde im Kneter unter Inertgasspülung sowie ohne Heizung oder Kühlung portionsweise innerhalb von 15 Minuten mit insgesamt 2450 g einer mit Hexamethyldisilazan vorbehandelten Flammkieselsäure mit einer BET-Oberfläche von 140 m²/g vermischt. Nach Beendigung der Füllstoffzugabe wurde die Mischung ohne Heizen und Kühlen eine Stunde geknetet, wobei die Masse eine Temperatur von 82°C erreichte. Danach wurde die Mischung drei Stunden bei 150°C im Inertgasstrom ausgeheizt und anschließend auf 90°C abgekühlt. Abschließend wurden 2600 g eines α,ω-Dihydropolydimethylsiloxans mit einer Viskosität von 1000 mPa•s und einem H-Gehalt von 120 ppm eingemischt. Die Polymer-/Füllstoff-Dispersion (6) wies eine Viskosität von 134000 mPa·s auf.

Basierend auf der Polymer-/Füllstoff-Dispersion (6) wurde eine additions-vernetzende Polyorganosiloxan-Zubereitung (6 A) mit identischer Zusammensetzung wie Zubereitung (4 A) hergestellt, die eine Viskosität von 38000 mPa·s aufwies.

450 Teile der Polyorganosiloxan-Zubereitung (6 A) wurden mit 50 Teilen der Polyorganosiloxan-Zubereitung (6 B) vermischt, welche identisch war mit der Polyorganosiloxan-Zubereitung (4 B).

Die katalysierte Mischung wies eine Viskosität von 26000 mPa·s und eine Verarbeitungszeit von 67 min auf. Die mechanischen Eigenschaften sind in Tabelle 2 angegeben.

### Beispiel 7 (Vergleichsbeispiel)

Eine Abmischung aus 1750 g eines α,ω-Bis(vinyldimethylsiloxy)-polydimethylsiloxans mit einer Viskosität von 1000 mPa•s und einem Rest-SiOH-Gehalt von 10 ppm und 1750 g eines α,ω-Bis(vinyldimethylsiloxy)polydimethylsiloxans mit einer Viskosität von 1000 mPa•s und einem Rest-SiOH-Gehalt von 200 ppm wurde im Kneter unter Inertgasspülung mit 110 g Wasser und 370 g Hexamethyldisilazan vermischt. Ohne Heizung oder Kühlung wurden portionsweise innerhalb von 15 Minuten insgesamt 2450 g einer unbehandelten Flammkieselsäure mit einer BET-Oberfläche von 140 m²/g eingearbeitet. Nach Beendigung der Füllstoffzugabe wurde die Mischung ohne Heizen oder Kühlen eine Stunde geknetet, wobei die Masse eine Temperatur von 70°C erreichte. Anschließend wurde die Mischung drei Stunden bei 150°C im Inertgasstrom ausgeheizt, danach auf 90°C abgekühlt. Abschließend wurden 2600 g eines α,ω-Dihydropolydimethylsiloxans mit einer Viskosität von 1000 mPa•s und einem H-Gehalt von 120 ppm eingemischt. Die Polymer-/Füllstoff-Dispersion (7) wies eine Viskosität von 58000 mPa•s auf.

Basierend auf der Polymer-/Füllstoff-Dispersion (7) wurde eine additionsvernetzende Polyorganosiloxan-Zubereitung (7 A) mit identischer Zusammensetzung wie Zubereitung (4 A) hergestellt, die eine Viskosität von 18000 mPa•s aufwies.

450 Teile der Polyorganosiloxan-Zubereitung (7 A) wurden mit 50 Teilen der Polyorganosiloxan-Zubereitung (7 B) vermischt, die identisch war mit der Polyorganosiloxan-Zubereitung (4 B). Die katalysierte Mischung wies eine Viskosität von 12000 mPa•s und eine Verarbeitungszeit von 133 min auf. Die mechanischen Eigenschaften sind in Tabelle 2 angegeben.

### Beispiel 8 (Vergleichsbeispiel)

Eine Abmischung aus 1750 g eines α,ω-Bis(vinyldimethylsiloxy)polydimethylsiloxans mit einer Viskosität von 1000 mPa•s und einem Rest-SiOH-Gehalt von 10 ppm und 1750 g eines α,ω-Bis(vinyldimethylsiloxy)polydimethylsiloxans mit einer Viskosität von 1000 mPa•s und einem Rest-SiOH-Gehalt von 200 ppm wurde im Kneter unter Inertgasspülung mit 45 g Wasser und 45 g Hexamethyldisilazan vermischt. Ohne Heizung oder Kühlung wurden portionsweise innerhalb von 40 Minuten insgesamt 2450 g einer unbehandelten Flammkieselsäure mit einer BET-Oberfläche von 140 m²/g eingearbeitet. Nach Beendigung der Füllstoffzugabe wurden weitere 330 g Hexamethyldisilazan zugesetzt, worauf die Mischung ohne Heizen oder Kühlen eine Stunde geknetet wurde, wobei die Masse eine Temperatur von 55°C erreichte. Anschließend wurde die Mischung drei Stunden bei 150°C im Inertgasstrom ausgeheizt, danach auf 90°C abgekühlt. Abschließend wurden 2600 g eines α,ω-Dihydropolydimethylsiloxans mit einer Viskosität von 1000 mPa•s und einem H-Gehalt von 120 ppm eingemischt Die Polymer-/Füllstoff-Dispersion (8) wies eine Viskosität von 29000 mPa•s auf.

Basierend auf der Polymer-/Füllstoff-Dispersion (8) wurde eine additionsvernetzende Polyorganosiloxan-Zubereitung (8 A) mit identischer Zusammensetzung wie Zubereitung (4 A) hergestellt, die eine Viskosität von 10000 mPa•s aufwies.

450 Teile der Polyorganosiloxan-Zubereitung (8 A) wurden mit 50 Teilen der Polyorganosiloxan-Zubereitung (8 B) vermischt, die identisch war mit der Polyorganosiloxan-Zubereitung (4 B).

Die katalysierte Mischung wies eine Viskosität von 7000 mPa·s und eine Verarbeitungszeit von 93 min auf. Die mechanischen Eigenschaften sind in Tabelle 2 angegeben.

### Beispiel 9 (Vergleichsbeispiel)

Eine Abmischung aus 1750 g eines α,ω-Bis(vinyldimethylsiloxy)-polydimethylsiloxans mit einer Viskosität von 1000 mPa•s und einem Rest-SiOH-Gehalt von 10 ppm und 1750 g eines α,ω-Bis(vinyldimethylsiloxy)polydimethylsiloxans mit einer Viskosität von 1000 mPa·s und einem Rest-SiOH-Gehalt von 200 ppm wurde im Kneter unter Inertgasspülung mit 75 g eines α,ω-Dihydroxypolydimethylsiloxans mit einer Viskosität von 40 mPa•s und einem OH-Gehalt von 39000 ppm vermischt. Ohne Heizung oder Kühlung wurden portionsweise innerhalb von 45 Minuten insgesamt 2450 g einer unbehandelten Flammkieselsäure mit einer BET-Oberfläche von 140 m²/g eingearbeitet. Nach Beendigung der Füllstoffzugabe wurde die Mischung ohne Heizen oder Kühlen eine Stunde geknetet, wobei die Masse eine Temperatur von 105°C erreichte. Anschließend wurde die Mischung eine Stunde bei 150°C im Inertgasstrom ausgeheizt, danach auf 90°C abgekühlt. Abschließend wurden 2600 g eines α,ω-Dihydropolydimethylsiloxans mit einer Viskosität von 1000 mPa·s und einem H-Gehalt von 120 ppm eingemischt Die Polymer-/Füllstoff-Dispersion (9) wies eine Viskosität von 800000 mPa•s auf.

Basierend auf der Polymer-/Füllstoff-Dispersion (9) wurde eine additionsvernetzende Polyorganosiloxan-Zubereitung (9 A) mit identischer Zusammensetzung wie Zubereitung (4 A) hergestellt, die eine für eine Viskositätsmessung zu starke Thixotropie aufwies.

450 Teile der Polyorganosiloxan-Zubereitung (9 A) wurden mit 50 Teilen der Polyorganosiloxan-Zubereitung (9 B) vermischt, die identisch war mit der Polyorganosiloxan-Zubereitung (4 B).

Die katalysierte Mischung wies ebenfalls eine für eine Viskositätsmessung zu starke Thixotropie auf.

### Beispiel 10 (Vergleichsbeispiel)

Eine Abmischung aus 3500 g eines α,ω-Dihydroxypolydimethylsiloxans mit einer Viskosität von 80 mPa•s und einem OH-Gehalt von 8000 ppm mit 44 g 1,3-Divinyl-1,1,3,3-tetramethyldisiloxan und 60 g einer 65%igen wässrigen KOH wurde im Kneter unter Inertgasspülung vorgelegt. Unter voller Heizung wurden portionsweise innerhalb von 45 Minuten insgesamt 2450 g einer unbehandelten Flammkieselsäure mit einer BET-Oberfläche von 140 m²/g eingearbeitet. Nach Beendigung der Füllstoffzugabe wurde die Mischung unter Heizen eine Stunde geknetet, wobei die Masse eine Temperatur von 140°C erreichte. Nach einer Abkühlphase bis zum Erreichen einer Mischungstemperatur von 120°C wurden 50 g Ameisensäure in zwei gleichen Portionen eingemischt. Nach einstündigem Kneten ohne Kühlung wurde die Mischung zwei Stunden bei 150°C im Inertgasstrom ausgeheizt, danach auf 120°C abgekühlt. Abschließend wurden 2600 g eines α,ω-Dihydropolydimethylsiloxans mit einer Viskosität von 1000 mPa•s und einem H-Gehalt von 120 ppm eingemischt. Die Polymer-/Füllstoff-Dispersion (10) wies eine Viskosität von 1100000 mPa•s auf.

Basierend auf der Polymer-/Füllstoff-Dispersion (10) wurde eine additionsvernetzende Polyorganosiloxan-Zubereitung (10 A) mit identischer Zusammensetzung wie Zubereitung (4 A) hergestellt, die eine für eine Viskositätsmessung zu starke Thixotropie aufwies.

450 Teile der Polyorganosiloxan-Zubereitung (10 A) wurden mit 50 Teilen der Polyorganosiloxan-Zubereitung (10 B) vermischt, die identisch war mit der Polyorganosiloxan-Zubereitung (4 B). Die katalysierte Mischung wies ebenfalls eine für eine Viskositätsmessung zu starke Thixotropie auf.

Die mechanischen Eigenschaften sind in Tabelle 2 angegeben.

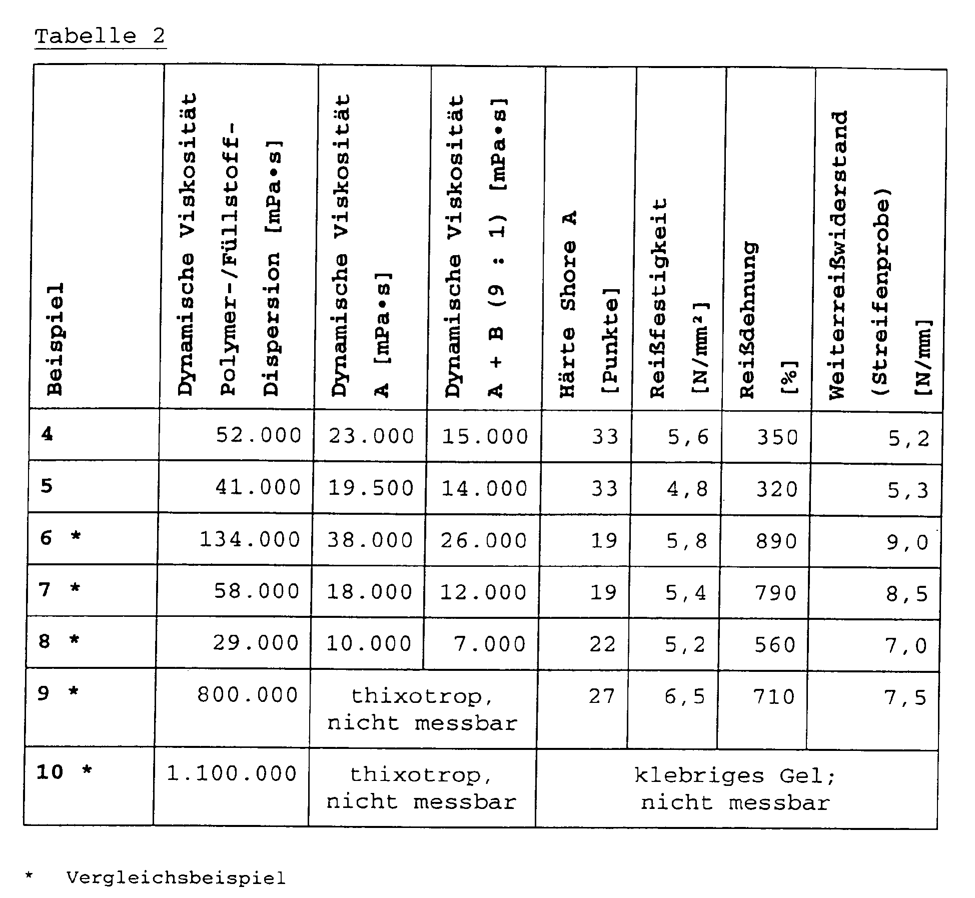

Die Polyorganosiloxan-Zubereitungen 4 A, 5 A, 6 A, 7 A, 8 A, 9 A und 10 A wurden jeweils mit einem polaren Additiv in Wirkkonzentration versetzt. Eine Minute nach Additivzugabe wurde die Viskosität gemessen (Tabelle 2a).

**Tabelle 2a**

| Additivzusatz | **Viskosität [mPa•s]** | | | | | | |
|---|---|---|---|---|---|---|---|
| | **Beispiele** | | **Vergleichsbeispiele** | | | | |
| | **4 A** | **5 A** | **6 A** | **7 A** | **8 A** | **9 A** | **10 A** |
| Kein | 23.000 | 19.500 | 38.000 | 18.000 | 10.000 | 1) | 1) |
| Antistatikum 3* (2%) | 22.500 | 20.500 | 1) | 1) | 1) | 1) | 2) |
| Antistatikum 4** (2%) | 21.500 | 17.000 | 1) | 1) | 1) | 1) | 2) |
| Haftvermittler 5*** (2%) | 19.000 | 16.000 | 1) | 1) | 1) | 1) | 2) |
| Haft-vermittler 6**** (3%) | 17.500 | 15.000 | 1) | 1) | 1) | 1) | 2) |
| Trennmittel 7***** (5%) | 21.500 | 18.500 | 1) | 1) | 1) | 1) | 2) |

| | | | | | | | |
|---|---|---|---|---|---|---|---|
| * HO(C₂H₄O)₁₀(CH₂)₃ (CH₃)₂SiO[(CH₃)₂SiO)₁₅ (CH₃)₂SiO(CH₂)₃(OC₂H₄)₁₀OH ** (CH₂=CH)(CH₃)₂SiO-[(CH₃)₂SiO]₋₄₅ -[**R**(CH₃) SiO]₋₈ SiO(CH₃)₂(CH=CH₂) **R** = (CH₂)₃(OC₂H₄)₄OCH₃ *** 3-(2,3-Epoxypropoxy)propyltrimethoxysilan **** γ-Methacryloxypropyltrimethoxysilan ***** α,ω-Bis(trimethylsiloxy)polyphenylmethylsiloxan mit einer Viskosität von 200 mPa•s 1) standfest/nicht messbar 2) bereits ohne polares Additiv standfest/nicht messbar | | | | | | | |

## Patentansprüche

1. Fließfähige, vernetzbare Polyorganosiloxanmasse, enthaltend
(A) zumindest eine Suspension von verstärkenden Füllstoffen in Polyorganosiloxanen,
(B) zumindest ein Vernetzungssystem, ausgewählt aus der Gruppe der Kondensations- und Additionsvernetzungssysteme
(C) zumindest einen entsprechenden Vernetzungskatalysator,
(D) **gegebenenfalls** ein oder mehrere polare Additive, und
(E) **gegebenenfalls** weitere Zusatzstoffe
**dadurch gekennzeichnet, dass** die Suspension (A) erhalten wird durch
(1) Vermischen eines
(X) Polyorganosiloxans mit einer Viskosität bei 23°C von 100 bis 500.000 mPa•s oder einer Mischung solcher Polyorganosiloxane mit
(Y) Wasser, unter der Maßgabe, dass die gesamte Zusatzmenge entweder gesondert, oder aber, als Teil- oder Gesamtmenge des zugesetzten Wassers, auch als Bestandteil des Kondensations-/Äquilibrierungskatalysators (Z) oder, in adsorbiertem Zustand, über den verstärkenden Füllstoff (F) in die Mischung eingebracht werden kann, und
(Z) einer als Kondensations-/Äquilibrierungskatalysator wirksamen Substanz oder einer Mischung solcher Substanzen,
(2) **gegebenenfalls** Äquilibrieren der Mischung bei erhöhter Temperatur, bevorzugt zwischen 50°C und 180°C über einen Zeitraum von 15 bis 120 Minuten,
(3) Zugabe eines verstärkenden Füllstoffes (F) mit einer spezifischen Oberfläche (BET) von mindestens 40 m²/g,
(4) Umsetzung bei erhöhter Temperatur, bevorzugt zwischen 50°C und 180°C,
(5) Deaktivierung des Katalysators (Z) durch Zugabe eines oder mehrerer Deaktivierungsmittel (DA),
(6) Entfernung flüchtiger Bestandteile durch Ausheizen im Inertgasstrom und/oder unter reduziertem Druck im Temperaturbereich zwischen 80°C und 180°C, und
(7) **gegebenenfalls** Zugabe eines weiteren Polysiloxans (XX) oder einer Mischung von Polysiloxanen.

2. Polyorganosiloxanmasse gemäß Anspruch 1, **dadurch gekennzeichnet, dass** die Polyorganosiloxane (X) als Bestandteil der Suspension (A) aus Einheiten der allgemeinen Formel (I)
RₐSiO_{(4-a)/2} (I)
aufgebaut sind, worin
R gleiche oder verschiedene einwertige, Si-C - gebundene. substituierte oder unsubstituierte C₁- bis C₁₈ - Kohlenwasserstoffreste oder einen Hydroxylrest, und
a die Werte 0, 1, 2 oder 3, durchschnittlich 1,85 - 2,4, bevorzugt 1,9 - 2,1,
bedeuten, mit der Maßgabe, dass R keine in Gegenwart des verwendeten Kondensations-/Äquilibrierungskatalysators reaktiven Reste darstellt, sofern diese Reste in einer Konzentration von > 1000 ppm, bevorzugt > 700 ppm, bezogen auf die Gesamtmenge der Polyorganosiloxane (X), vorhanden sind.

3. Polyorganosiloxanmasse gemäß Anspruch 1 oder 2, **dadurch gekennzeichnet, dass** die Polyorganosiloxane (X) eine Viskosität bei 23°C von 100 bis 500.000 mPa•s aufweisen.

4. Polyorganosiloxanmasse gemäß einem der Ansprüche 1 bis 3, **dadurch gekennzeichnet, dass** als Polyorganosiloxane (X) Polydiorganosiloxane der allgemeinen Formel (II)
(R¹)ₓ(R²)₃₋ₓ SiO[Si(R²)₂O]ₘ [Si(R²)(R¹)O]ₙ Si(R²)₃₋ₓ(R¹)ₓ (II)
verwendet werden, worin
R¹ gleiche oder verschiedene einwertige, SiC-gebundene, ungesättigte C₁ - C₈ - Alkylreste,
R² gleiche oder verschiedene einwertige, SiC-gebundene, gegebenenfalls substituierte gesättigte C₁ - C₈ - Alkylreste, gegebenenfalls substituierte C₁ - C₈ - Arylreste, oder den Hydroxylrest
m eine Zahl von 100 bis 1200, bevorzugt 150 bis 700, besonders bevorzugt 200 bis 500,
n 0 oder eine Zahl von 1 bis 50
x 0 oder eine Zahl von 1 bis 3
bedeuten.

5. Polyorganosiloxanmasse gemäß einem der Ansprüche 1 bis 4, **dadurch gekennzeichnet, dass** der Katalysator (Z) ausgewählt wird aus der Gruppe enthaltend Karbonsäuren, gegebenenfalls in Kombination mit ihren quaternären Ammoniumsalzen, Sulfonsäuren der allgemeinen Formel XSO₃H, worin X Alkyl, Aryl, und Alkaryl oder Halogen bedeutet, sekundäre und tertiäre Alkylamine, Alkylsulfoniumsilanolate, Alkalimetalloxide, -hydroxide, -alkoxide, -silanolate, quaternäre Ammonium- und Phosphonium-Verbindungen.

6. Polyorganosiloxanmasse gemäß einem der Ansprüche 1 bis 5, **dadurch gekennzeichnet, dass** die Polyorganosiloxanmasse als weiteren Bestandteil der Suspension (A) Polyorganosiloxane (XX) aufgebaut aus Einheiten der allgemeinen Formel (III)
RₐSiO_{(4-a)/2} (III)
enthält, worin
R gleiche oder verschiedene einwertige, Si-C - gebundene, substituierte oder unsubstituierte C₁- bis C₁₈ - Kohlenwasserstoffreste, den Hydroxylrest oder Wasserstoffrest, und
a die Werte 0, 1, 2 oder 3
bedeuten.

7. Polyorganosiloxanmasse gemäß einem der Ansprüche 1 bis 6, **dadurch gekennzeichnet, dass** als Polyorganosiloxane (XX) Polydiorganosiloxane der allgemeinen Formel (IV)
(R¹)ₓ(R²)₃₋ₓSiO[Si(R²)₂O]ₘ [Si(R²)(R¹)O]ₙSi(R²)₃₋ₓ(R¹)ₓ (IV)
verwendet werden, worin
R¹ gleiche oder verschiedene einwertige, SiC-gebundene, ungesättigte C₁ - C₈ - Alkylreste, kondensierbare oder hydrolysierbare Reste,
R² gleiche oder verschiedene einwertige, SiC-gebundene, gegebenenfalls substituierte gesättigte C₁ - C₁₈ - Alkylreste, gegebenenfalls substituierte C₁ - C₁₈ - Arylreste,
m 0 oder eine Zahl von 1 bis 1500, bevorzugt 0 bis 1000, besonders bevorzugt 0 bis 600,
n 0 oder eine Zahl von 1 bis 50
x 0 oder eine Zahl von 1 bis 3
bedeuten.

8. Verfahren zur Herstellung fließfähiger, vernetzbarer Polyorganosiloxanmassen, enthaltend
(A) zumindest eine Suspension von verstärkenden Füllstoffen in Polyorganosiloxanen,
(B) zumindest ein Vernetzungssystem, ausgewählt aus der Gruppe der Kondensations- und Additionsvernetzungssysteme
(C) zumindest einen entsprechenden Vernetzungskatalysator,
(D) **gegebenenfalls** ein oder mehrere polare Additive, und
(E) gegebenenfalls weitere Zusatzstoffe
**dadurch gekennzeichnet, dass** die Suspension (A) erhalten wird durch
(1) Vermischen eines
(X) Polyorganosiloxans mit einer Viskosität bei 23°C von 100 bis 500.000 mPa•s oder einer Mischung solcher Polyorganosiloxane mit
(Y) Wasser, unter der Maßgabe, dass die gesamte Zusatzmenge entweder gesondert, oder aber, als Teil- oder Gesamtmenge des zugesetzten Wassers, auch als Bestandteil des Kondensations-/Äquilibrierungskatalysators (Z) oder, in adsorbiertem Zustand, über den verstärkenden Füllstoff (F) in die Mischung eingebracht werden kann, und
(Z) einer als Kondensations-/Äquilibrierungskatalysator wirksamen Substanz oder einer Mischung solcher Substanzen,
(2) **gegebenenfalls** Äquilibrieren der Mischung bei erhöhter Temperatur, bevorzugt zwischen 50°C und 180°C über einen Zeitraum von 15 bis 120 Minuten,
(3) Zugabe eines verstärkenden Füllstoffes (F) mit einer spezifischen Oberfläche (BET) von mindestens 40 m²/g,
(4) Umsetzung bei erhöhter Temperatur, bevorzugt zwischen 50°C und 180°C,
(5) Deaktivierung des Katalysators (Z) durch Zugabe eines oder mehrerer Deaktivierungsmittel (DA),
(6) Entfernung flüchtiger Bestandteile durch Ausheizen im Inertgasstrom und/oder unter reduziertem Druck im Temperaturbereich zwischen 80°C und 180°C, und
(7) **gegebenenfalls** Zugabe eines weiteren Polysiloxans (XX) oder einer Mischung von Polysiloxanen.

9. Verfahren nach Anspruch 8, **dadurch gekennzeichnet, dass** das Vermischen des Polyorganosiloxans (X), des Wassers (Y) und des Kondensations-/Äquilibrierungskatalysators (Z) im Schritt (1) sowie gegebenenfalls die Vorreaktion dieser Mischung im Schritt (2) in demselben Mischgerät vorgenommen werden, in dem in der Folge im Schritt (3) die Zugabe und im Schritt (4) die In-situ-Behandlung des verstärkenden Füllstoffs (F) sowie in Schritt (5) die Deaktivierung des Katalysators (Z) und gegebenenfalls im Schritt (6) die Zugabe eines weiteren Polyorganosiloxans (XX) oder einer Mischung von Polyorganosiloxanen erfolgen.

10. Verfahren nach Anspruch 8 oder 9, **dadurch gekennzeichnet, dass** man zu ihrer Herstellung
(AA)die Suspension (A) erhältlich nach einem Verfahren gemäß Anspruch 8 oder 9, wobei diese gegebenenfalls Polyorganosiloxan (XX) enthalten kann, das kondensierbare oder hydrolysierbare Gruppen gemäß der allgemeinen Formel (IV) aufweisen kann,
(BB) **gegebenenfalls** ein Polyorganosiloxan oder ein Gemisch aus mehreren Polyorganosiloxanen (XX), das kondensierbare oder hydrolysierbare Gruppen gemäß der allgemeinen Formel (IV) aufweist, wobei der Rezepturbestandteil (BB) dann obligatorisch ist, wenn (AA) kein Polyorganosiloxan (XX) enthält, das kondensierbare oder hydrolysierbare Gruppen gemäß der allgemeinen Formel (IV) aufweist,
(CC)**gegebenenfalls** einen oder mehrere Vernetzer, ausgewählt aus
- einem Organosilan der allgemeinen Formel
R²_{4-b} SiR¹_{b} (V),
worin
R¹ gleich oder verschieden sein können, und dieselben hydrolysierbaren Reste R¹ sein können wie in der allgemeinen Formel (IV),
R² gleich oder verschieden sein können, und dieselben Reste R² sein können wie in der allgemeinen Formel (IV) und
b eine ganze Zahl von 2 bis 4
bedeutet,
- ein oder mehrere teilhydrolysierte Reaktionsprodukte aus Organosilanen gemäß der allgemeinen Formel (V), wobei der Rezepturbestandteil (CC) dann obligatorisch ist, wenn es sich bei dem in Rezepturbestandteil (AA) oder (BB) enthaltenen Polyorganosiloxan (XX) um ein hydroxyfunktionelles Polyorganosiloxan, bevorzugt α,ω-Dihydroxypolyorganosiloxan, handelt,
(DD)einen im Kondensationssystem wirksamen Vernetzungskatalysator
(EE)**gegebenenfalls** ein Polyorganosiloxan oder ein Gemisch aus mehreren Polyorganosiloxanen (XX), das keine kondensierbaren oder hydrolysierbaren Gruppen gemäß der allgemeinen Formel (IV) aufweist, bevorzugt α,ω-Bis(trialkylsiloxy)polyorganosiloxan, wobei der Trialkylsiloxyrest bevorzugt ein Trimethylsiloxy- oder Vinyldimethylsiloxyrest ist,
(FF)**gegebenenfalls** einen oder mehrere nicht verstärkende oder teilverstärkende Füllstoffe,
(GG)**gegebenenfalls** ein oder mehrere polare Additive,
(HH)**gegebenenfalls** weitere Zusatzstoffe und
(JJ)**gegebenenfalls** Wasser
vermischt.

11. Verfahren nach einem der Ansprüche 8 bis 10, **dadurch gekennzeichnet, dass** man zu ihrer Herstellung
(AAA) die Suspension (A) erhältlich nach einem Verfahren gemäß Anspruch 8 oder 9, wobei diese gegebenenfalls Polyorganosiloxan (X) enthalten kann, das gleiche oder verschiedene einwertige, SiC-gebundene, ungesättigte C₁ - C₈ - Alkylreste gemäß der allgemeinen Formel (IV) aufweisen kann, oder gegebenenfalls Polyorganosiloxan (XX) enthalten kann, das gleiche oder verschiedene einwertige, SiC-gebundene, ungesättigte C₁ - C₈ - Alkylreste gemäß der allgemeinen Formel (IV) oder Wasserstoffreste aufweisen kann,
(BBB) **gegebenenfalls** ein Polyorganosiloxan (XX) oder ein Gemisch aus mehreren Polyorganosiloxanen (XX), das gleiche oder verschiedene einwertige, SiC-gebundene, ungesättigte C₁ - C₈ - Alkylreste gemäß der allgemeinen Formel (IV) aufweist, wobei der Rezepturbestandteil (BBB) dann obligatorisch ist, wenn (AAA) kein Polyorganosiloxan (X) enthält, das gleiche oder verschiedene einwertige, SiC-gebundene, ungesättigte C₁ - C₈ - Alkylreste gemäß der allgemeinen Formel (IV) aufweist, oder kein Polyorganosiloxan (XX) enthält, das gleiche oder verschiedene einwertige, SiC-gebundene, ungesättigte C₁ - C₈ - Alkylreste gemäß der allgemeinen Formel (IV) aufweist,
(CCC) **gegebenenfalls** einen oder mehrere Vernetzer, ausgewählt aus einem Organohydrogenpolysiloxan der allgemeinen Formel
R'_{b}H_{c}SiO_{(4-b-c)/4} (VII),
worin
R' jeweils für sich unabhängig voneinander Reste R² gemäß der allgemeinen Formel (IV)
b einen Wert von 0,6 bis 2,3 und
c einen Wert von 0,005 bis 1,3
bedeuten, mit der Maßgabe, dass die Summe (b+c) einen Wert von 0,8 bis 2,7 und das Organohydrogenpolysiloxan der allgemeinen Formel (VII) in jedem Molekül mindestens zwei Si-gebundene Wasserstoffreste aufweist, wobei der Rezepturbestandteil (CCC) dann obligatorisch ist, wenn es sich bei dem in Rezepturbestandteil (AAA) enthaltenen Polyorganosiloxan (XX) um kein Organohydrogenpolysiloxan handelt, sowie das molare Verhältnis der Si-H-Gruppen im Vernetzer (CCC) und gegebenenfalls im Polyorganosiloxan (XX) als Bestandteil der Suspension (A) zu den Alkenylgruppen in den Rezepturbestandteilen (AAA) und gegebenenfalls (BBB) 0,3 bis 10, bevorzugt 0,5 bis 5 beträgt,
(DDD) einen im Additionssystem wirksamen Vernetzungskatalysator,
(EEE) **gegebenenfalls** ein Polyorganosiloxan oder ein Gemisch aus mehreren Polyorganosiloxanen (XX), das keine kondensierbaren oder hydrolysierbaren Gruppen gemäß der allgemeinen Formel (IV) aufweist,
(FFF) **gegebenenfalls** einen oder mehrere nicht verstärkende oder teilverstärkende Füllstoffe,
(GGG) **gegebenenfalls** ein oder mehrere polare Additive und
(HHH) **gegebenenfalls** weitere Zusatzstoffe
vermischt.

12. Verfahren nach einem der Ansprüche 8 bis 11, **dadurch gekennzeichnet, dass** der Vernetzer (CCC) aus der Gruppe enthaltend lineare, verzweigte oder zyklische Organohydrogenpolysiloxane gemäß den allgemeinen Formeln (VIII), (IX) und (X)
H_{y}(R'')_{3-y}SiO[Si(R'')₂O]ₘ [SiH(R'')O]ₙ Si (R'')_{3-y}H_{y} (VIII)
[Si(R'')₂O]ₚ [SiH(R'')O]_{q} (IX)
[(R'')₃₋ᵣHᵣSiO]_{z}SiHₛ(R'')_{4-s-z} (X)
worin
R'' gleiche oder verschiedene einwertige, SiC-gebundene, gegebenenfalls substituierte, gesättigte oder ungesättigte C₁-C₈ - Alkylreste, bevorzugt Methyl und Vinyl, gegebenenfalls substituierte C₁-C₈ - Arylreste, bevorzugt Phenyl,
m 0 oder eine Zahl von 1 bis 300, bevorzugt 0 bis 200, besonders bevorzugt 0 bis 150,
n 0 oder eine Zahl von 1 bis 100, bevorzugt 0 bis 60,
p 0 oder eine Zahl von 1 bis 6, bevorzugt 0 bis 4,
q eine Zahl von 2 bis 8,
r eine Zahl von 1 bis 2,
s 0 oder 1,
y 0 oder eine Zahl von 1 bis 2, bevorzugt 0 bis 1, und
z eine Zahl von 2 bis 4, bevorzugt 3 bis 4,
bedeuten, ausgewählt wird.
